# EUROPÄISCHE PATENTSCHRIFT

(11) **EP 1 599 616 B1**
(45) Veröffentlichungstag und Bekanntmachung des Hinweises auf die Patenterteilung: **11.04.2012**
(21) Anmeldenummer: 04714294.8
(22) Anmeldetag: 25.02.2004
(51) Int. Cl.: C09D 4/00, C23C 22/60, C23C 22/68, C23C 22/50, C23C 22/53, C23C 22/83, C09D 5/08, C23C 22/74

(54) **VERFAHREN ZUR BESCHICHTUNG VON METALLISCHEN OBERFLÄCHEN MIT EINEM GEMISCH ENTHALTEND MINDESTENS ZWEI SILANE**
METHOD FOR COATING METALLIC SURFACES WITH A MIXTURE CONTAINING AT LEAST TWO SILANES
PROCEDE DE REVETEMENT DE SURFACES METALLIQUES AU MOYEN D'UN MELANGE CONTENANT AU MOINS DEUX SILANES

(30) Priorität: 25.02.2003 DE 10308237; 17.07.2003 DE 10332744
(43) Veröffentlichungstag der Anmeldung: 30.11.2005
(73) Patentinhaber: Chemetall GmbH, 60487 Frankfurt am Main (DE)
(72) Erfinder: WALTER, Manfred, 63589 Linsengericht (DE); SCHÖNE, Axel, 61130 Nidderau (DE); JUNG, Christian, 96173 Oberhaid (DE); BROWN, Kevin, Northampton NN3 2AA (GB); KOLBERG, Thomas, 64646 Heppenheim (DE); KLIEHM, Norbert, 63674 Altenstadt (DE)
(74) Vertreter: Hübner, Günter
(86) Internationale Anmeldenummer: PCT/EP2004/001830
(87) Internationale Veröffentlichungsnummer: WO 2004/076718

(56) Entgegenhaltungen:
- EP-A- 1 130 132
- WO-A-00/46310
- WO-A-01/90207
- WO-A-02/31062
- DE-A- 3 151 115
- US-A1- 2001 031 811
- US-B1- 6 203 854

## Beschreibung

Die Erfindung betrifft ein Verfahren zur Beschichtung von metallischen Oberflächen mit einer Fluor-freie Silane sowie mindestens ein Fluor-haltiges Silan und gegebenenfalls organischen Filmbildner oder/und weitere Komponenten enthaltenden wässerigen Zusammensetzung. Ferner betrifft die Erfindung entsprechende wässerige Zusammensetzungen sowie die Verwendung der nach dem erfindungsgemäßen Verfahren beschichteten Substrate.

Die bislang am häufigsten eingesetzten Verfahren zur Oberflächenbehandlung bzw. Vorbehandlung vor der Lackierung von Metallen, insbesondere von Metallband, basieren auf dem Einsatz von Chrom(VI)-Verbindungen zusammen mit diversen Zusatzstoffen. Aufgrund der toxikologischen und ökologischen Risiken, die derartige Verfahren mit sich bringen und darüber hinaus aufgrund der absehbaren gesetzlichen Einschränkungen bezüglich der Anwendung von Chromat-haltigen Verfahren wird schon seit längerer Zeit nach Alternative zu diesen Verfahren auf allen Gebieten der Metalloberflächenbehandlung gesucht.

Der Einsatz von Silanen in wässerigen Zusammensetzungen zur Herstellung von Siloxan-reichen korrosionsschützenden Beschichtungen ist grundsätzlich bekannt. Diese Beschichtungen haben sich bewährt, jedoch sind die Verfahren zur Beschichtung mit einer vorwiegend Silan enthaltenden wässerigen Zusammensetzung teilweise schwierig anzuwenden. Nicht immer wird diese Beschichtung mit optimalen Eigenschaften ausgebildet. Außerdem kann es Probleme geben, die sehr dünnen transparenten Silanbeschichtungen auf dem metallischen Untergrund sowie deren Fehlstellen mit bloßem Auge oder mit optischen Hilfsmitteln ausreichend charakterisieren zu können. Der Korrosionsschutz und die Lackhaftung der gebildeten Siloxan-reichen Beschichtungen sind oft, aber nicht immer hoch und teilweise auch bei geeigneter Applikation für bestimmte Anwendungen nicht ausreichend hoch.

Bei der Gestaltung Silan-haltiger wässeriger Zusammensetzungen hat sich außerdem eine kleine bzw. große Zugabemenge an mindestens einer Komponente ausgewählt aus der Gruppe von Monomeren, Oligomeren und Polymeren bewährt. Bei derartigen Zusammensetzungen ist die Art und Menge der Silan-Zugabe teilweise von entscheidender Bedeutung für den Erfolg. Üblicherweise sind jedoch die Zugabemengen an Silan hierzu vergleichsweise gering - meistens nur bis zu 5 Gew.-% - und wirken dann als "coupling agent", wobei die haftvermittelnde Wirkung insbesondere zwischen metallischem Substrat und Lack und ggf. zwischen Pigment und organischen Lackbestandteilen vorherrschen sollte, aber untergeordnet teilweise auch eine geringe vernetzende Wirkung auftreten kann. Vorwiegend werden Silan-Zusätze zu thermisch härtbaren Harzsystemen zugegeben.

Darüber hinaus sind auch Harzgemische bekannt, bei denen Harze mit anorganischen Säuren abgemischt werden, um auf diese Weise auch einen Beizangriff und somit einen besseren Kontakt der Harzschicht direkt mit der metallischen Oberfläche zu erzielen. Diese Zusammensetzungen haben den Nachteil, dass aufgrund des Beizangriffes während des Kontaktierens der Behandlungsflüssigkeit (Dispersion) zum Substrat eine Kontamination eintritt. Dies führt zur Anreicherung von Metallen in der Behandlungsflüssigkeit und dadurch bedingt zur permanenten Veränderung der chemischen Zusammensetzung der Behandlungsflüssigkeit, wodurch der Korrosionsschutz signifikant beeinträchtigt wird. Diese Metalle werden durch den Beizangriff aus der metallischen Oberfläche der zu behandelnden Substrate herausgelöst.

WO 00/46310 lehrt ein Verfahren zur Beschichtung von metallischen Oberflächen mit einer flüssigen Zusammensetzung, die ein hydrolysiertes Aminosilan und ein hydrolysiertes Multi-silyl-funktionelles Silan, aber kein Fluor-haltiges Silan enthält.

DE-A1-101 49 148 beschreibt wässerige Beschichtungszusammensetzungen auf Basis von organischem Filmbildner, feinen anorganischen Partikeln sowie Gleitmittel oder/und organischem Korrosionsinhibitor, die trotz Abwesenheit von Chromverbindungen hervorragende Ergebnisse der Korrosionsbeständigkeit, Haftfestigkeit und Umformbarkeit unter anderem auf Galvalume^{®}-Stahlblechen erbrachten, aber trotzdem noch eine unzureichende Korrosionsbeständigkeit eines organischen Films von etwa 1 µm Schichtdicke auf feuerverzinkten, elektrolytisch verzinkten oder Galfan^{®}-beschichteten metallischen Bändern zeigten, also auf metallischen Oberflächen, die schwierig vor Korrosion zu schützen sind. Die Zusammensetzungen, ihre Bestandteile sowie die Eigenschaften der Rohstoffe und Beschichtungen dieser Publikation werden ausdrücklich in diese Anmeldung einbezogen.

Der Gegenstand der deutschen Patentanmeldung DE 103 08 237 vom 25.02.2003 zu ähnlich zusammengesetzten Zusammensetzungen und zu entsprechenden Verfahren der Beschichtung von metallischen Oberflächen wird bezüglich der Rohstoffe und ihrer Eigenschaften, des Ansetzens der Zusammensetzungen bzw. des Hydrolysierens der Silane, der Zusammensetzungen wie Konzentrate und Bädern und ihrer Eigenschaften, der Wirkungen, der Ausbildung der Beschichtungen wie z.B. der Trocknung, der Verfilmung und der Härtung, der Zusammensetzungen und der Eigenschaften der ausgebildeten Beschichtungen sowie der Verfahrensvarianten explizit einbezogen.

WO 01/90267 A2 lehrt Zusammensetzungen auf Basis bestimmter Fluorocarbosilane mit einem Gehalt an Tensid, an Borsäure oder Phosphorsäure als Katalysator und an einer polymerisierbaren Siliciumverbindung, wobei letztere ein Organoalkoxysilan oder/und Silicat sein kann. Auch WO 02/31062 A2 beschreibt eine Emulsion auf Basis bestimmter Fluorocarbosilane mit einem Gehalt an Tensid und an einer Siliciumverbindung, wobei letztere ein Aminosilan, Epoxysilan, Mercaptosilan, Organoalkoxysilan oder/und Silicat sein kann. Gegebenenfalls enthält diese Zusammensetzung zusätzlich mindestens ein Filmbildungshilfsmittel auf Basis von SiO₂, TiO₂, ZrO₂, Organoalkoxysilan oder/und Polysilazan. Bei beiden Publikationen wird ein hoher Tensidgehalt zum Unterdrücken der Selbstkondensation des Fluorkohlenstoff-haltigen Silans als erforderlich angesehen, aber kein Zusatz an organischem Polymer angeführt.

US 2001/0031811 A1 betrifft eine Beschichtungszusammensetzung, die neben Wasser im wesentlichen aus einem Epoxysilan, einem zweiten Silan auf Basis von Amino-, Chlor-, Mercapto oder/und Methacryloxysilan, einem Tetraalkoxysilan, organischem Polymer ausgewählt aus Hydroxyethylcellulose, Polyvinylalkohol und Polyvinylpyrrolidon, einem Tensid, einem niederen Alkohol, einer wasserlöslichen Säure und gegebenenfalls einem fluorierten Silan besteht.

Aufgabe der Erfindung ist es, die Nachteile des Standes der Technik zu überwinden und insbesondere ein Verfahren zur Beschichtung von metallischen Oberflächen vorzuschlagen, das für die Beschichtung von Teilen und für die Beschichtung von metallischen Bändern bei hohen Beschichtungsgeschwindigkeiten geeignet ist, das weitgehend oder gänzlich frei von Chrom(VI)-Verbindungen anwendbar ist und das möglichst einfach großtechnisch einsetzbar ist.

Es wurde überraschend gefunden, dass bereits mit einer vergleichsweise geringen Zugabemenge an einem Fluor-haltigen Silan zu einer wässerigen Zusammensetzung Beschichtungen hergestellt werden können, die deutlich hydrophober und korrosionsbeständiger sind als vergleichbare Beschichtungen ohne den Zusatz an Fluor-haltigem Silan, ohne dass die Wasserlöslichkeit der Zusammensetzung und ohne dass die Stabilität der Zusammensetzung dadurch wesentlich beeinträchtigt wurde. Denn normalerweise würde man erwarten, dass die hydrophobere Zusammensetzung auch zu einer deutlichen Beeinträchtigung der Wasserlöslichkeit führen würde.

Die Aufgabe wird gelöst mit einem Verfahren zur Beschichtung einer metallischen Oberfläche, insbesondere von Aluminium, Eisen, Kupfer, Magnesium, Nickel, Titan, Zinn, Zink oder Aluminium, Eisen, Kupfer, Magnesium, Nickel, Titan, Zinn oder/und Zink enthaltenden Legierungen, mit einer wässerigen, gegebenenfalls auch organisches Lösemittel und andere Komponenten enthaltenden Zusammensetzung, die weitgehend oder gänzlich von Chrom(VI)-Verbindungen frei ist, zur Vorbehandlung vor einer weiteren Beschichtung oder zur Behandlung, bei der der zu beschichtende Körper ggf. - insbesondere ein Band oder Bandabschnitt nach der Beschichtung umgeformt wird, das dadurch gekennzeichnet ist, dass die Zusammensetzung neben Wasser
a) eine Kombination aus mindestens einem funktionellen Trialkoxysilan, mindestens einem Aminosilan, mindestens einem Ureidosilan oder mindestens einem Vinylsilan, jeweils mit mindestens einem Bis-Trialkoxysilan, die jeweils fluorfrei und hydrolysierbar oder/und teilweise hydrolysiert sind sowie
b) mindestens ein hydrolisierbares oder/und zumindest teilweise hydrolysiertes Fluor-haltiges Silan enthält,
wobei die Silane in der Zusammensetzung wasserlöslich sind oder insbesondere aufgrund von (weiteren) Hydrolyse- oder/und chemischen Reaktionen vor dem Auftragen auf die metallische Oberfläche wasserlöslich werden,
wobei die saubere, gebeizte, gereinigte oder/und vorbehandelte metallische Oberfläche mit der wässerigen Zusammensetzung in Kontakt gebracht und ein Film auf der metallischen Oberfläche ausgebildet wird, der anschließend getrocknet wird und ggf. zusätzlich ausgehärtet wird,
wobei der getrocknete und ggf. auch ausgehärtete Film eine Schichtdicke im Bereich von 0,001 bis 10 µm aufweist, bestimmt durch Ablösen einer definierten Fläche des gehärteten Films und Auswiegen oder durch Bestimmung des Siliciumgehalts der Beschichtung z.B. mit Röntgenfluoreszenzanalyse und entsprechende Umrechnung.

Die Aufgabe wird auch gelöst durch wässerige Zusammensetzungen entsprechend Anspruch 25.

Die Unteransprüche gestalten das Verfahren weiter aus. Verwendungen können Anspruch 26 und Anspruch 27 entnommen werden.

Das Silan wird in dieser Anmeldung durch den dominierenden Bestandteil der in der Regel kommerziell erhältlichen Produkte charakterisiert. Die in der wässerigen Zusammensetzung (Konzentrat bzw. Bad) enthaltenen Silane sind Monomere, Oligomere, Polymere, Copolymere oder/und Reaktionsprodukte mit weiteren Komponenten aufgrund Hydrolysereaktionen, Kondensationsreaktionen oder/und weiteren Reaktionen. Die Reaktionen erfolgen vor allem in der Lösung, beim Trocknen bzw. gegebenenfalls Härten der Beschichtung. Der Begriff "Silan" wird hierbei für Silane, Silanole, Siloxane, Polysiloxane und deren Reaktionsprodukte bzw. Derivate benutzt, die oft "Silan"-Gemische sind. Aufgrund der oft sehr komplexen chemischen Reaktionen, die hierbei auftreten, und sehr aufwendiger Analysen und Arbeiten können die jeweiligen weiteren Silane bzw. sonstigen Reaktionsprodukte nicht angegeben werden.

Die Silane im Sinne dieser Anmeldung werden als wasserlöslich angesehen, wenn sie summarisch bei Raumtemperatur in der Silane enthaltenden Zusammensetzung eine Löslichkeit in Wasser von mindestens 0,05 g/L, vorzugsweise von mindestens 0,1 g/L, besonders bevorzugt von mindestens 0,2 g/L oder von mindestens 0,3 g/L aufweisen. Das bedingt nicht, dass jedes einzelne dieser Silane diese Mindestlöslichkeit aufweisen muß, sondern dass diese Mindestwerte durchschnittlich erzielt werden.

Vorzugsweise ist in der wässerigen Zusammensetzung mindestens ein Silan enthalten ausgewählt aus den Fluor-freien Silanen: Aus jeweils mindestens einem Silan mit mindestens einer Aminogruppe wie einem Aminoalkylsilan, einem Silan mit mindestens einer Bernsteinsäuregruppe oder/und Bernsteinsäureanhydridgruppe, einem Bis-Silyl-Silan, einem Silan mit mindestens einer Epoxygruppe wie einem Glycidoxysilan, einem (Meth)acrylato-Silan, einem Multi-Silyl-Silan, einem Ureidosilan, einem Vinylsilan oder/und mindestens einem Silanol oder/und mindestens einem Siloxan bzw. Polysiloxan von chemisch entsprechender Zusammensetzung wie die zuvor genannten Silane. Es enthält mindestens ein Silan oder/und (jeweils) mindestens ein monomeres, dimeres, oligomeres oder/und polymeres Silanol oder/und (jeweils) mindestens ein monomeres, dimeres, oligomeres oder/und polymeres Siloxan, wobei Oligomere hierbei auch schon Trimere umfassen sollen.

Insbesondere ist hierin mindestens ein Fluor-freies Silan enthalten ausgewählt aus der Gruppe von oder auf Basis von
Glycidoxyalkyltrialkoxysilan,
Methacryloxyalkyltrialkoxysilan,
(Trialkoxysilyl)alkylbernsteinsäuresilan,
Aminoalkylaminoalkylalkyldialkoxysilan,
(Epoxycycloalkyl)alkyltrialkoxysilan,
Bis-(trialkoxysilylalkyl)amin,
Bis-(trialkoxysilyl)ethan,
(Epoxyalkyl)trialkoxysilan,
Aminoalkyltrialkoxysilan,
Ureidoalkyltrialkoxysilan,
N-(trialkoxysilylalkyl)alkylendiamin,
N-(aminoalkyl)aminoalkyltrialkoxysilan,
N-(trialkoxysilylalkyl)dialkylentriamin,
Poly(aminoalkyl)alkyldialkoxysilan,
Tris(trialkoxysilyl)alkylisocyanurat,
Ureidoalkyltrialkoxysilan und
Acetoxysilan.

Besonders bevorzugt ist hierin mindestens ein Silan enthalten ist ausgewählt aus der Gruppe von oder auf Basis von
3-Glycidoxypropyltriethoxysilan,
3-Glycidoxypropyltrimethoxysilan,
3-Methacryloxypropyltriethoxysilan,
3-Methacryloxypropyltrimethoxysilan,
3-(Triethoxysilyl)propylbernsteinsäuresilan,
Aminoethylaminopropylmethyldiethoxysilan,
Aminoethylaminopropylmethyldimethoxysilan,
Beta-(3,4-Epoxycyclohexyl)ethyltriethoxysilan,
Beta-(3,4-Epoxycyclohexyl)ethyltrimethoxysilan,
Beta-(3,4-Epoxycyclohexyl)methyltriethoxysilan,
Beta-(3,4-Epoxycyclohexyl)methyltrimethoxysilan,
Gamma-(3,4-Epoxycyclohexyl)propyltriethoxysilan,
Gamma- (3,4-Epoxycyclohexyl)propyltrimethoxysilan,
Bis(triethoxysilylpropyl)amin,
Bis(trimethoxysilylpropyl)amin,
(3,4-Epoxybutyl)triethoxysilan,
(3,4-Epoxybutyl)trimethoxysilan,
Gamma-Aminopropyltriethoxysilan,
Gamma-Aminopropyltrimethoxysilan,
Gamma-Ureidopropyltrialkoxysilan,
N-(3-(trimethoxysilyl)propyl)ethylendiamin,
N-beta-(aminoethyl)-gamma-aminopropyltriethoxysilan,
N-beta-(aminoethyl)-gamma-aminopropyltrimethoxysilan,
N-(gamma-triethoxysilylpropyl)diethylentriamin,
N-(gamma-trimethoxysilylpropyl)diethylentriamin,
N-(gamma-triethoxysilylpropyl)dimethylentriamin,
N-(gamma-trimethoxysilylpropyl)dimethylentriamin,
Poly(aminoalkyl)ethyldialkoxysilan,
Poly(aminoalkyl)methyldialkoxysilan,
Tris(3-(triethoxysilyl)propyl)isocyanurat
Tris(3-(trimethoxysilyl)propyl)isocyanurat und
Vinyltriacetoxysilan.

Vorzugsweise ist in der wässerigen Zusammensetzung mindestens ein Silan enthalten ausgewählt aus den Fluor-haltigen Silanen: Aus jeweils mindestens einem Acyloxysilan, einem Alkoxysilan, einem Silan mit mindestens einer Aminogruppe wie einem Aminoalkylsilan, einem Silan mit mindestens einer Bernsteinsäuregruppe oder/und Bernsteinsäureanhydridgruppe, einem Bis-Silyl-Silan, einem Silan mit mindestens einer Epoxygruppe wie einem Glycidoxysilan, einem (Meth)acrylato-Silan, einem Multi-Silyl-Silan, einem Ureidosilan, einem Vinylsilan oder/und mindestens einem Silanol oder/und mindestens einem Siloxan bzw. Polysiloxan von chemisch entsprechender Zusammensetzung wie die zuvor genannten Silane, das jeweils mindestens eine Gruppe mit einem oder mit mindestens einem Fluoratom enthält. Insbesondere enthält die wässerige Zusammensetzung mindestens ein Fluoralkoxyalkylsilan, mindestens ein mono-, di- oder trifunktionelles Fluorsilan, mindestens ein Mono-, Bis- oder Tris-Fluorsilan, mindestens ein Fluorsilan auf Basis Ethoxysilan oder/und auf Basis Methoxysilan oder/und mindestens ein Fluorsilan mit mindestens einer funktionellen Gruppe wie z.B. einer Aminogruppe insbesondere als Cokondensat, wie z.B. ein Fluoralkyldialkoxysilan, ein Fluoraminoalkylpropyltrialkoxysilan, ein Fluormethansulfonat, ein Fluorpropylalkyldialkoxysilan, ein Triphenylfluorsilan, ein Trialkoxyfluorsilan, ein Trialkylfluorsilan oder/und ein Tridecafluorooctyltrialkoxysilan.

Besonders bevorzugt enthält die Zusammensetzung mindestens ein Silan, das mindestens zwei Aminogruppen sowie mindestens eine Ethyl- oder/und mindestens eine Methylgruppe enthält.

Vorzugsweise beträgt der Gehalt an allen Silanen a) und b) einschließlich der gegebenenfalls mit anderen Komponenten gebildeten Reaktionsprodukte zusammen 0,01 bis 100 g/L in einem Konzentrat bzw. 0,002 bis 12 g/L in einem Bad. Bei einem Konzentrat liegt dieser Gehalt besonders bevorzugt im Bereich von 0,05 bis 80 g/L, ganz besonders bevorzugt im Bereich von 0,1 bis 60 g/L, insbesondere etwa bei 0,5, 1, 2, 3, 4, 5, 6, 7, 8, 9, 10, 11, 12, 13, 14, 15, 16, 17, 18, 20, 22,5, 25, 27,5, 30, 35, 40, 45, 50 oder 55 g/L. Bei einem Bad liegt dieser Gehalt besonders bevorzugt im Bereich von 0,005 bis 5 g/L, ganz besonders bevorzugt im Bereich von 0,01 bis 3 g/L, insbesondere etwa bei 0,05, 0,1, 0,2, 0,3, 0,4, 0,5, 0,6, 0,7, 0,8, 0,9, 1,0, 1,1, 1,2, 1,3, 1,4, 1,5, 1,6, 1,7, 1,8, 2,0, 2,25, 2,5 oder 2,75 g/L. Die Verdünnung des Konzentrats, die üblicherweise mit Wasser und nur vereinzelt mit einem Gemisch aus Wasser und mindestens einem organischen Lösemittel erfolgt, kann insbesondere um den Faktor 1,5 bis 30 erfolgen, häufig um den Faktor 2 bis 20, insbesondere um den Faktor 3 bis 12.

Vorzugsweise liegt das Mengenverhältnis von a) zu b) jeweils im Bereich von 1 : 0,01 bis 1 : 4, besonders bevorzugt im Mengenverhältnis von 1 : 0,03 bis 1 : 3, ganz besonders bevorzugt im Mengenverhältnis von 1 : 0,05 bis 1 : 2,5 insbesondere bei jeweils mindestens 1 : 0,08, 1 : 0,12, 1 : 0,16, 1 : 0,2, 1 : 0,25, 1 : 0,3, 1 : 0,35, 1 : 0,4, 1 : 0,45 oder 1 : 0,5 bzw. insbesondere bei jeweils bis zu 1 : 2,5, 1 : 2,2, 1 : 2, 1 : 1,8, 1 : 1,6, 1 : 1,4, 1 : 1,2, 1 : 1,1, 1 : 1, 1 : 0,9, 1 : 0,8, 1 : 0,7 oder 1 : 0,6. Das jeweilige Optimum dieses Mengenverhältnisses kann jedoch schwanken, je nachdem welche Silane a) und b) eingesetzt werden und wie diese hydrolysiert werden.

Vorzugsweise wird eine wässerige Zusammensetzung danach ausgewählt, dass mehr als 60 Gew.-%, insbesondere mehr als 80 Gew.-% der Silane eine gute Wasserlöslichkeit aufweisen und dass die hiermit hergestellte Zusammensetzung als Konzentrat oder als Bad eine gute Stabilität für die Zeit der Verarbeitung aufweist. Diese Verarbeitungszeit kann je nach Anforderungen zwischen 2 Stunden und 6 Monaten variieren. Die gute Stabilität bedeutet dabei, dass die Zusammensetzung möglichst keine oder nur geringfügige Ausfällungen und möglichst keine oder nur geringfügige chemische oder/und physikalische Veränderungen erfährt. Die im wesentlichen aus Silanen und Lösemitteln bestehende Zusammensetzung ist vorzugsweise klar. Hierbei ist bevorzugt, solche Silane und solche Reaktionen und Verfahrensschritte auszuwählen, dass die hierbei aus den Silanen entstehenden Verbindungen in stärkerem Ausmaße, insbesondere vorwiegend oder sogar weitgehend Strukturen annehmen, die als Leiter-Strukturen anzusehen sind.

Mindestens zwei unterschiedliche Fluor-freie Silane, gegebenenfalls sogar drei oder vier unterschiedliche Fluor-freie Silane werden der wässerigen Zusammensetzung zugesetzt. Unter den vielen möglichen Kombinationen ist es besonders bevorzugt, eine Kombination aus mindestens einem funktionellen Trialkoxysilan und mindestens einem Bis-Trialkoxysilan, aus mindestens einem Aminosilan und mindestens einem Bis-Trialkoxysilan, aus mindestens einem Bis-Trialkoxysilan und aus mindestens einem Vinylsilan, aus mindestens einem Bis-Trialkoxysilan und aus mindestens einem Ureidosilan, aus mindestens einem Vinylsilan und aus mindestens einem Bis-Trialkoxysilylpropylsilan einzusetzen, aus mindestens einem Aminoalkylsilan und aus mindestens einem Bis-Trialkoxysilylpropylsilan, aus mindestens einem Bis-Trialkoxysilylpropyltetrasulphan und aus mindestens einem Bis-Trialkoxysilylpropylsilan.

Es kann auch besonders bevorzugt sein, mindestens zwei unterschiedliche Fluor-haltige Silane, gegebenenfalls sogar drei oder vier unterschiedliche Fluor-haltige Silane der wässerigen Zusammensetzung zuzusetzen.

Besonders bevorzugt ist eine Kombination aus jeweils mindestens einem Organosilan, einem organofunktionellen Silan und einem Fluor-Silan, insbesondere aus jeweils mindestens einem Aminosilan, einem Multi-Silyl-Silan und einem Fluor-Silan.

Es kann vorteilhaft sein, die einzelnen Silane, soweit sie nicht bereits ausreichend hydrolysiert sind, erst einzeln zu hydrolysieren, gegebenenfalls einzeln zu lagern und dann der Zusammensetzung zuzugeben. Gegebenenfalls werden während der Zeit der Hydrolyse auch chemische bzw. Kondensationsreaktionen ablaufen. Aber auch danach können gegebenenfalls bei der Lagerung, aber teilweise auch noch nach Zugabe zu der Zusammensetzung im Konzentrat oder Bad noch die Hydrolyse oder/und die chemischen bzw. Kondensationsreaktionen weiter ablaufen.

Die wässerige Zusammensetzung, die in dieser Anmeldung als Lösung bezeichnet wird, muß keine Lösung im strengen Sinne sein, zumal nur durch zusätzliche Untersuchungen oft ermittelt werden kann, ob es sich um echte Lösungen handelt. Insbesondere kann die wässerige Zusammensetzung auch eine Suspension oder/und Emulsion sein, vor allem, wenn auch Partikel, insbesondere anorganische Partikel, zugesetzt werden.

Die wässerige Zusammensetzung enthält als Lösemittel mindestens Wasser, wobei der Gehalt an Wasser in einem Lösemittelgemisch bei einem Konzentrat größer als 50 Gew.-% und bei einer Badzusammensetzung größer als 75 Gew.-% ist. Vorzugsweise beträgt der Gehalt an Wasser im Lösemittelgemisch bei einem Konzentrat mindestens 60 Gew.-%, besonders bevorzugt mindestens 70 Gew.-%, ganz besonders bevorzugt mindestens 80 Gew.-%, insbesondere mindestens 90 Gew.-%. Vorzugsweise beträgt der Gehalt an Wasser im Lösemittelgemisch bei einer Badzusammensetzung mindestens 80 Gew.-%, besonders bevorzugt mindestens 85 Gew.-%, ganz besonders bevorzugt mindestens 90 Gew.-%, insbesondere mindestens 95 Gew.-%. Der Gehalt an weiteren Lösemitteln neben Wasser, also insbesondere an organischen Lösemitteln wie z.B. Ethanol, Methanol, Propanol oder/und Isopropanol kann dabei einerseits dem Konzentrat bzw. dem Bad zugesetzt werden oder/und im Konzentrat bzw. Bad durch chemische Reaktionen gebildet werden. Aus Gründen des Umweltschutzes ist es jedoch bevorzugt, den Gehalt an organischen Lösemitteln möglichst gering zu halten. Aus verarbeitungstechnischen Gründen ist ein gewisser oder geringer Gehalt an organischen Lösemitteln manchmal bevorzugt, aufgrund chemischer Reaktionen jedoch teilweise unvermeidbar ist, soweit das organische Lösemittel danach nicht künstlich entzogen wird.

Die wässerige Zusammensetzung enthält nicht mehr als 0,2 g/L Chrom, vorzugsweise nicht mehr als 0,1 g/L Chrom, besonders bevorzugt nicht mehr als 0,02 g/L Chrom, wobei der Chromgehalt insbesondere von Einschleppungen bzw. aus Ätzprozessen an Chrom-haltigen Legierungen bzw. Verchromungen herrühren kann. Vorzugsweise sind auch keine Gehalte an weiteren Schwermetallen außer Eisen, Mangan und Zink insgesamt größer als 0,8 g/L enthalten.

In einer ersten besonders bevorzugten Ausführungsvariante dieser Erfindung enthält die wässerige Zusammensetzung die Silane a) und b), Wasser und gegebenenfalls mindestens ein organisches Lösemittel wie z.B. Methanol, Ethanol, Isopropanol oder/und Propanol, mindestens ein alkalisches Mittel wie z.B. Ammoniak, mindestens ein saures Mittel wie z.B. Essigsäure oder/und Eisessig, mindestens ein Tensid zur Verringerung der Oberflächenspannung und zur gleichmäßigeren und sichereren Beschichtung der metallischen Oberfläche wie z.B. mindestens ein nichtionisches, mindestens ein anionisches, mindestens ein kationisches oder/und mindestens ein amphoteres Tensid oder/und mindestens ein Additiv wie z.B. mindestens ein Konservierungsmittel oder/und mindestens ein Biozid.

Vorzugsweise weisen die Badzusammensetzungen der vorwiegend Silane enthaltenden wässerigen Zusammensetzungen einen Wassergehalt im Bereich von 80 bis 99,9 Gew.-% auf, vorzugsweise im Bereich von 90 bis 99,8 Gew.-%, besonders bevorzugt im Bereich von 94 bis 99,7 Gew.-%, vor allem im Bereich von 96 bis 99,6 Gew.-%, insbesondere von etwa 91, 91,5, 92, 92,5, 93, 93,5, 94, 94,5, 95, 95,5, 96, 96,5, 97, 97,5, 97,9, 98,2, 98,5, 98,8, 99,1 oder 99,4 Gew.-%.

Die Gehalte an weiteren Komponenten außer Silanen und Lösemitteln im Bad betragen üblicherweise nicht mehr als insgesamt 5 g/L, vorzugsweise nicht mehr als insgesamt 3 g/L, besonders bevorzugt nicht mehr als 1,5 g/L, können aber im Konzentrat entsprechend höher liegen.

In einer zweiten und einer dritten besonders bevorzugten Ausführungsvariante dieser Erfindung ist den Zusammensetzungen der ersten besonders bevorzugten Ausführungsvariante zusätzlich noch mindestens eine Komponente ausgewählt aus den folgenden elf Komponenten zugesetzt:
c) Metallchelat,
d) Monomer, Oligomer, Polymer oder/und Copolymer,
e) ausgewählt aus mindestens einer der folgenden Komponenten
   e₁) mindestens einer anorganischen Verbindung in Partikelform mit einem mittleren Partikeldurchmesser gemessen an einem Rasterelektronenmikroskop im Bereich von 0,005 bis zu 0,3 µm Durchmesser,
   e₂) mindestens einem Gleitmittel,
   e₃) mindestens einem organischen Korrosionsinhibitor,
   e₄) mindestens ein Korrosionsschutzpigment,
   e₅) mindestens einem Mittel zur Neutralisation oder/und zur sterischen Stabilisation der Kunstharze,
   e₆) mindestens ein organisches Lösemittel,
   e₇) mindestens ein Siloxan,
   e₈) mindestens einen langkettigen Alkohol und
   e₉) mindestens ein Tensid.

Besonders bevorzugt sind Mengen an Chelat(en) jeweils einschließlich der hieraus entstehenden Reaktionsprodukte von 0,01 bis 15 Gew.-% bezogen auf den Feststoffgehalt der Badzusammensetzung, besonders bevorzugt jeweils unabhängig voneinander Mengen von 0,03 bis 11 Gew.%, insbesondere etwa jeweils unabhängig voneinander Mengen von 0,05, 0,1, 0,5, 1, 1,5, 2, 2,5, 3, 3,5, 4, 4,5, 5, 5,5, 6, 6,5, 7, 7,5, 8, 8,5, 9, 9,5, 10 oder 10,5 Gew.-%.

Vorzugsweise wird mindestens ein Silan ausgewählt, das mit Wasser kompatibel ist, d.h. dass das mindestens eine Silan bzw. ggf. seine Hydrolyse-und Kondensationsprodukte störungsfrei mit den Komponenten der wässerigen Zusammensetzung mischbar sind und über mehrere Wochen dauerhaltbar sind und dass es einen fehlerfreien Naßfilm und Trockenfilm auszubilden gestattet, der insbesondere geschlossen, gleichmäßig und frei von Kratern ist. Insbesondere wird mindestens ein Silan ausgewählt, das eine hohe Korrosionsbeständigkeit insbesondere in Kombination mit dem ausgewählten mindestens einen Chelat ermöglicht.

Vorzugsweise wird mindestens ein Chelat ausgewählt, das sich über mehrere Tage oder Wochen stabil in wässerigen Dispersionen in Gegenwart der übrigen Komponenten der wässerigen Zusammensetzung verhält und das eine hohe Korrosionsbeständigkeit ermöglicht. Außerdem ist es vorteilhaft, wenn sowohl das mindestens eine Silan, als auch das mindestens eine Chelat einerseits mit der vorgesehenen metallischen Oberfläche, die hiermit kontaktiert werden soll, chemisch anbinden kann und ggf. ebenfalls zu dem nachträglich aufzubringenden Lack chemisch anbinden kann. Das mindestens eine Metallchelat ist insbesondere eines von Al, B, Ca, Fe, Hf, La, Mg, Mn, Si, Ti, Y, Zn, Zr oder/und mindestens einem Lanthanid wie Ce oder wie einem Ce-haltigen Lanthanidengemisch, besonders bevorzugt ausgewählt aus der Gruppe von Al, Hf, Mn, Si, Ti, Y und Zr.

Vorzugsweise weisen die Konzentrate der vorwiegend Silane sowie Chelat(e) enthaltenden wässerigen Zusammensetzungen sowie der Teilkomponenten als Ausgangsprodukt für Polymer-haltige Zusammensetzungen einen Wassergehalt im Bereich von 20 bis 95 Gew.-% auf, insbesondere von 30 bis 90 Gew.-% auf. Vorzugsweise weisen die Konzentrate die Silane einschließlich der hieraus entstehenden Reaktionsprodukte in einem Gehalt im Bereich von 0,1 bis 60 Gew.-% auf, besonders bevorzugt im Bereich von 0,2 bis 45 Gew.-%, ganz besonders bevorzugt im Bereich von 0,3 bis 35 Gew.-%, vor allem im Bereich von 0,5 bis 32 Gew.-%, insbesondere von etwa 0,8, 1, 2, 4, 6, 8, 10, 12, 14, 16, 18, 20, 22,5, 25, 27,5 oder 30 Gew.-%, und das mindestens eine Chelat ggf. einschließlich der hieraus entstehenden Reaktionsprodukte im Bereich von 0,1 bis 50 Gew.-%, besonders bevorzugt im Bereich von 0,2 bis 40 Gew.-%, ganz besonders bevorzugt im Bereich von 0,3 bis 30 Gew.-%, vor allem im Bereich von 0,5 bis 25 Gew.-%, insbesondere von etwa 00,75, 1, 2, 4, 6, 8, 10, 12, 14, 16, 18, 20 oder 22,5 Gew.-%.

Vorzugsweise weisen die Badzusammensetzungen der vorwiegend Silan und Chelat enthaltenden wässerigen Zusammensetzungen einen Wassergehalt im Bereich von 80 bis 99,9 Gew.-% auf, worin auch ein Anteil an mindestens einem organischen Lösemittel enthalten sein kann. Vorzugsweise liegt der Gehalt an Wasser oder/und mindestens einem organischen Lösemittel im Bereich von 90 bis 99,8 Gew.-%, besonders bevorzugt im Bereich von 94 bis 99,7 Gew.-%, vor allem im Bereich von 96 bis 99,6 Gew.-%, insbesondere von etwa 95, 95,5, 96, 96,5, 97, 97,5, 97,9, 98,2, 98,5, 98,8, 99,1 oder 99,4 Gew.-%.

Vorzugsweise weisen die Badzusammensetzungen die Silane einschließlich der hieraus mit anderen Komponenten gegebenenfalls entstehenden Reaktionsprodukte in einem Gehalt im Bereich von 0,01 bis 10 Gew.-% auf, besonders bevorzugt im Bereich von 0,05 bis 7 Gew.-%, ganz besonders bevorzugt im Bereich von 0,1 bis 5 Gew.-%, vor allem im Bereich von 0,2 bis 4 Gew.-%, insbesondere von etwa 0,4, 0,6, 0,8, 1,0, 1,1, 1,2, 1,3, 1,4, 1,5, 1,6, 1,7, 1,8, 1,9, 2,0, 2,1, 2,2, 2,4, 2,6, 2,8, 3,0, 3,2, 3,4, 3,6 oder 3,8 Gew.-%, und das mindestens eine Chelat einschließlich der gegebenenfalls hieraus entstehenden Reaktionsprodukte im Bereich von 0,01 bis 10 Gew.-% auf, besonders bevorzugt im Bereich von 0,05 bis 7 Gew.-%, ganz besonders bevorzugt im Bereich von 0,1 bis 5 Gew.-%, vor allem im Bereich von 0,2 bis 4 Gew.-%, insbesondere von etwa 0,3, 0,4, 0,5, 0,6, 0,7, 0,8, 0,9, 1,0, 1,1, 1,2, 1,3, 1,4, 1,6, 1,8, 2,0, 2,2, 2,4, 2,6, 2,8, 3,0, 3,2, 3,4, 3,6 oder 3,8 Gew.-%.

Vorzugsweise machen die Gehalte der Silane und des mindestens einen Chelats jeweils einschließlich der hieraus entstehenden Reaktionsprodukte, insbesondere solchen von Titan, Hafnium oder/und Zirkonium, mindestens 20 Gew.-%, insbesondere mindestens 30 Gew.-%, besonders bevorzugt mindestens 40 Gew.-%, ganz besonders bevorzugt mindestens 50 Gew.-%, vor allem jeweils mindestens 60, 70, 80, 90, 94, 95, 96, 97, 98 oder 99 Gew.-% der Feststoffgehalte dieser Zusammensetzung aus. Besonders bevorzugt besteht diese Zusammensetzung im wesentlichen aus Wasser, jeweils mindestens einem Silan oder/und deren Reaktionsprodukten, mindestens einem Chelat ggf. einschließlich der hieraus entstehenden Reaktionsprodukte sowie gegebenenfalls Gehalten von Substanzen ausgewählt aus der Gruppe von Alkoholen, Säuren wie Carbon- und Fettsäuren wie Essigsäure oder/und Mineralsäuren und anderen pH-Wert beeinflussenden Substanzen wie Ammoniak bzw. Additiven und Verunreinigungen. Der Gesamtgehalt an weiteren Verbindungen einschließlich Additiven neben Silan und Chelat beträgt üblicherweise bis zu 20 Gew.-% des Feststoffgehalts an Silan und Chelat, vorzugsweise bis zu 15 Gew.-%, besonders bevorzugt bis zu 10 Gew.-%, ganz besonders bevorzugt bis zu 5 Gew.-%, vor allem bis zu 1 oder 2 Gew.-%.

Obwohl das Verhältnis des mindestens einen Silans einschließlich der hieraus entstehenden Reaktionsprodukte zum mindestens einen Chelat ggf. einschließlich der hieraus entstehenden Reaktionsprodukte vorzugsweise im Bereich von 0,8 : 1 bis 1,2 : 1 liegen kann, ist es überraschend deutlich geworden, dass dieses Verhältnis auch insbesondere im Bereich von 0,2 : 1 bis 0,5 : 1 oder bei 2 : 1 bis 5 : 1 liegen kann, da es in bestimmten Situationen dort ein Optimum geben kann.

Der pH-Wert der Badzusammensetzung kann insbesondere im Bereich von 3 bis 9,5 liegen, vorzugsweise im Bereich von 3,5 bis 9, insbesondere im Bereich von 4 bis 8,8. Zur Einstellung des pH-Werts kann u.a. ein Zusatz einer schwachen Säure oder einer verdünnten starken Säure bzw. ein Säuregemisch zugesetzt werden. Insbesondere kann mindestens eine Säure wie Carbon- oder Fettsäuren wie Essigsäure oder/und Mineralsäuren und anderen pH-Wert beeinflussenden Substanzen wie Ammoniak verwendet werden. Die Badzusammensetzung kann teilweise bis zu pH-Werten um etwa 3,5 hinunter durch Säurezusatz eingestellt werden, wenn das chemische System den gewählten pH-Wert verträgt und stabil bleibt. Vorzugsweise kann auch ein Lösemittel wie ein Alkohol zur Stabilisierung des Silans zugesetzt werden.

Die mit diesen Badzusammensetzungen ausgebildeten Beschichtungen weisen typischerweise eine Schichtdicke im Bereich von 0,01 bis 0,6 µm, meistens von 0,015 bis 0,25 µm auf.

Über die Silane hinaus kann die erfindungsgemäße Zusammensetzung auch organische Monomere, Oligomere, Polymere oder/und Copolymere enthalten. Vorzugsweise umfasst der Begriff Copolymere im Sinne dieser Anmeldung auch Blockcopolymere und Pfropfcopolymere.

Die Säurezahl der Kunstharze beträgt bevorzugt 3 bis 100, besonders bevorzugt 3 bis 60 oder 4 bis 50. Insbesondere werden der wässerigen Zusammensetzung Copolymerisate mit einer Säurezahl im Bereich von 3 bis 50 zugesetzt. Gegebenenfalls sind die zuzusetzenden Komponenten des organischen Filmbildners bereits teilweise neutralisiert. Der organische Filmbildner kann vorzugsweise einen Anteil an mindestens einem Copolymerisat mit einer Säurezahl im Bereich von 3 bis 80 enthalten, insbesondere zu mindestens 50 Gew.-% der zugesetzten Kunstharze. In einem hohen Bereich der Säurezahl ist es üblicherweise nicht notwendig, einen Filmbildner kationisch, anionisch oder/und sterisch zu stabilisieren. Bei einer geringen Säurezahl ist jedoch eine solche Stabilisierung oft notwendig. Dann ist es vorteilhaft, bereits (teil-)stabilisierte Kunstharze bzw. deren Gemische einzusetzen.

Die wässerige Zusammensetzung enthält vorzugsweise mindestens ein Kunstharz wie organisches Polymer, Copolymer oder/und deren Mischung, insbesondere ein Kunstharz auf Basis Acrylat, Ethylen, Polyester, Polyurethan, Siliconpolyester, Epoxid, Phenol, Styrol, Melamin-Formaldehyd, Harnstoff-Formaldehyd oder/und Vinyl. Der organische Filmbildner kann vorzugsweise ein Kunstharzgemisch aus mindestens einem Polymer oder/und mindestens einem Copolymerisat sein, das jeweils unabhängig voneinander einen Gehalt an Kunstharz auf Basis Acrylat, Epoxid, Ethylen, Harnstoff-Formaldehyd, Phenol, Polyester, Polyurethan, Styrol, Styrolbutadien oder/und Vinyl enthält. Hierbei kann es sich auch um ein kationisch, anionisch oder/und sterisch stabilisiertes Kunstharz bzw. Polymer oder/und deren Dispersion oder sogar deren Lösung handeln. Der Begriff Acrylat im Sinne dieser Anmeldung schließt Acrylsäureester, Polyacrylsäure, Methacrylsäureester und Methacrylat ein.

Der organische Filmbildner kann vorzugsweise mindestens eine Komponente auf der Basis von
Acryl-Polyester-Polyurethan-Copolymerisat,
Acryl-Polyester-Polyurethan-Styrol-Copolymerisat,
Acrylsäureester,
Acrylsäureester-Methacrylsäureester, ggf. mit freien Säuren
oder/und Acrylnitril,
Ethylen-Acryl-Gemisch,
Ethylen-Acryl-Copolymerisat,
Ethylen-Acryl-Polyester-Copolymerisat,
Ethylen-Acryl-Polyurethan-Copolymerisat,
Ethylen-Acryl-Polyester-Polyurethan-Copolymerisat,
Ethylen-Acryl-Polyester-Polyurethan-Styrol-Copolymerisat,
Ethylen-Acryl-Styrol-Copolymerisat,
Polyesterharzen mit freien Carboxylgruppen kombiniert mit Melamin-Formaldehydharzen,
einem Kunstharzgemisch oder/und Copolymerisat auf der Basis von Acrylat und Styrol,
einem Kunstharzgemisch oder/und Copolymerisat auf der Basis von Styrolbutadien,
einem Kunstharzgemisch oder/und Copolymerisat von Acrylat und Epoxid,
auf der Basis von einem Acryl-modifizierten Carboxylgruppenhaltigen Polyester zusammen mit Melamin-Formaldehyd und Ethylen-Acryl-Copolymerisat,
Polycarbonat-Polyurethan,
Polyester-Polyurethan,
Styrol,
Styrol-Vinylacetat,
Vinylacetat,
Vinylester oder/und
Vinylether enthalten.

Der organische Filmbildner kann aber auch vorzugsweise als Kunstharz einen Gehalt an organischem Polymer, Copolymer oder/und deren Mischungen auf der Basis von Polyethylenimin, Polyvinylalkohol, Polyvinylphenol, Polyvinylpyrrolidon oder/und Polyasparaginsäure, insbesondere Copolymere mit einer Phosphor enthaltenden Vinylverbindung, enthalten. Vorzugsweise wird der wässerigen Zusammensetzung auch ein leitfähiges Polymer zugesetzt.

Bei der zweiten besonders bevorzugten Ausführungsvariante der Erfindung liegt das Gewichtsverhältnis an Verbindungen der Komponente d) - Monomere/Oligomere/Polymere/Copolymere - zu Silanen im Konzentrat oder/und im Bad vorzugsweise im Bereich von 0,1 : 1 bis 10 : 1, besonders bevorzugt im Bereich von 0,2 : 1 bis 5 : 1, ganz besonders bevorzugt im Bereich von 0,3 : 1 bis 3 : 1, insbesondere bei Werten bis 2 : 1 oder bis 1,5 : 1. Bei dieser Ausführungsvariante können die Silane nicht nur und üblicherweise nur untergeordnet oder gar nicht als "coupling agent" wirken.

Bei der dritten besonders bevorzugten Ausführungsvariante der Erfindung liegt das Gewichtsverhältnis an Verbindungen der Komponente d) - Monomere/Oligomere/Polymere/Copolymere - zu Silanen im Konzentrat oder/und im Bad vorzugsweise im Bereich von 3 : 1 bis 200 : 1, besonders bevorzugt im Bereich von 8 : 1 bis 120 : 1, ganz besonders bevorzugt im Bereich von 12 : 1 bis 100 : 1. Bei dieser Ausführungsvariante wirken die Silane in vielen Fällen teilweise, vorwiegend oder gänzlich nur als "coupling agent". Insbesondere bei dieser Ausführungsvariante ist es vielfach vorteilhaft, einen langkettigen Alkohol e₈) als Filmbildungshilfsmittel einzusetzen, der während der Ausbildung des Films für eine Annäherung oder Angleichung der Glasübergangstemperaturen T_{g} bzw. der Mindestfilmbildungstemperaturen MFT sorgt. Hierdurch können Beschichtungen entstehen, die bezüglich der organischen Substanzen besonders homogen aufgebaut sind, was sich auf die Eigenschaften dieser Beschichtungen vorteilhaft auswirkt.

In einer hierbei besonders bevorzugten Ausführungsform kann ein Gemisch von organischen Filmbildnern eingesetzt werden, bei denen zumindest ein Teil der Filmbildner eine Glasübergangstemperatur T_{g} von im wesentlichen gleichen oder/und ähnlichem T_{g} aufweist. Besonders bevorzugt ist es dabei, dass mindestens ein Teil der organischen Filmbildner eine Glasübergangstemperatur T_{g} im Bereich von 10 bis 70°C, ganz besonders bevorzugt im Bereich von 15 bis 65 °C, insbesondere im Bereich von 20 bis 60 °C aufweist. Der organische Filmbildner enthält dann vorzugsweise mindestens einen Anteil an mindestens einem Polymer oder/und mindestens einem Copolymerisat mit einer Mindestfilmbildungstemperatur MFT im Bereich von - 10 bis + 99 °C, besonders bevorzugt im Bereich von 0 bis 90 °C, insbesondere ab 5 °C oder ab 10 °C. Hierbei ist es besonders bevorzugt, dass mindestens zwei, wenn nicht sogar alle organischen Filmbildner eine Mindestfilmbildungstemperatur in einem dieser Temperaturbereiche aufweisen - soweit eine Mindestfilmbildungstemperatur angegeben werden kann.

Besonders vorteilhaft ist es hierbei, wenn alle organischen Filmbildner bei der Trocknung verfilmen. Besonders bevorzugt ist es, wenn der wässerigen Zusammensetzung Kunstharze zugesetzt werden, die zu mindestens 80 Gew.-% thermoplastische Eigenschaften aufweisen, insbesondere zu mindestens 90 Gew.-%.

Die Auswahl der geeigneten Filmbildungshilfsmittel ist hierbei nicht einfach, wobei oft ein Gemisch aus mindestens zwei Filmbildungshilfsmitteln erforderlich ist. Insbesondere vorteilhaft als Filmbildungshilfsmittel sind sogenannte langkettige Alkohole, insbesondere solche mit 4 bis 20 C-Atomen, wie ein Butandiol, ein Butylglykol, ein Butyldiglykol, ein Ethylenglykolether wie Ethylenglykolmonobutylether, Ethylenglykolmonoethylether, Ethylenglykolmonomethylether, Ethylglykolpropylether, Ethylenglykolhexylether, Diethylenglykolmethylether, Diethylenglykolethylether, Diethylenglykolbutylether, Diethylenglykolhexylether oder ein Polypropylenglykolether wie Propylenglykolmonomethylether, Dipropylenglykolmonomethylether, Tripropylenglykolmonomethylether, Propylenglykolmonobutylether, Dipropylenglykolmonobutyl-ether, Tripropylenglykolmonobutylether, Propylenglykolmonopropylether, Dipropylenglykolmonopropylether, Tripropylenglykolmonopropylether, Propylenglykolphenylether, Trimethylpentandioldiisobutyrat, ein Polytetrahydrofuran, ein Polyetherpolyol oder/und ein Polyesterpolyol. Im Unterschied zum Verfilmen werden für thermisch härtende organische Beschichtungen üblicherweise Temperaturen von mindestens 120 °C zur Vernetzung benötigt.

Bei einer vierten besonders bevorzugten Ausführungsvariante der Erfindung wird durch geeignete Maßnahmen eine hydrophobe Oberfläche ausgebildet, die aufgrund der Hydrophobie oder/und der Oberflächenmikrostruktur selbstreinigende Eigenschaften aufweist. Hierbei kann die Oberflächenmikrostruktur durch Zusatz von organischen oder/und anorganischen Partikeln, durch Ausbildung von organischen Partikeln, durch die geeignete Verfahrensführung eine solche Mikrostruktur erhalten, dass hierdurch eine Strukturierung im Nanometer- oder/und Mikrometer-Bereich erfolgt. Vorzugsweise weisen die Partikel, die zugesetzt werden, in stärkerem Maße eine rauhe Oberfläche oder/und eine komplizierte Geometrie auf oder/und lagern sich so zusammen oder/und sind so zusammengelagert, dass stärker rauhe bzw. kompliziert geformte Agglomerate oder/und Aggregate entstehen. Dies kann durch Zusatz von Partikeln mit unterschiedlicher Partikelfeinheit, das heißt unterschiedlicher mittlerer Partikelgröße oder/und unterschiedlicher Partikelgrößenverteilung unterstützt werden. Die derart hergestellte Beschichtung kann vorzugsweise eine Oberfläche aufweisen, die eine Mikrostruktur aufweist, die zumindest teilweise so ausgebildet ist, dass sich einer mittelfeinen Mikrostruktur eine Mikrostruktur überlagert. Diese Beschichtung kann auf Basis der Zusammensetzungen der besonders bevorzugten ersten, zweiten oder dritten Ausführungsvariante zusammengesetzt sein.

Darüber hinaus gibt es weitere bevorzugte Ausgestaltungen, bei denen insbesondere mindestens eine Komponente ausgewählt aus e₁) bis e₉) enthalten und gegebenenfalls auch mindestens eine der Komponenten c) oder d) enthalten ist, gegebenenfalls neben mindestens einem Monomer/Oligomer/Polymer/Copolymer oder/und neben mindestens einer anorganischen Verbindung in Partikelform.

Vorzugsweise wird als Gleitmittel e₂) mindestens ein Wachs ausgewählt aus der Gruppe der Paraffine, Polyethylene und Polypropylene verwendet, insbesondere ein oxidiertes Wachs, wobei der Gehalt an Wachsen in der wässerigen Zusammensetzung vorzugsweise im Bereich von 0,01 bis 5 Gew.-% liegt, besonders bevorzugt im Bereich von 0,02 bis 3,5 Gew.-%, ganz besonders bevorzugt im Bereich von 0,05 bis 2 Gew.-%. Vorzugsweise liegt der Schmelzpunkt des als Gleitmittel eingesetzten Wachses im Bereich von 40 bis 165°C, besonders bevorzugt im Bereich von 50 bis 160 °C, insbesondere im Bereich von 120 bis 150 °C. Besonders vorteilhaft ist es, zusätzlich zu einem Gleitmittel mit einem Schmelzpunkt im Bereich von 120 bis 165 °C ein Gleitmittel mit einem Schmelzpunkt im Bereich von 45 bis 95 °C oder mit einer Glasübergangstemperatur im Bereich von - 20 bis + 60 °C zuzusetzen, insbesondere in Mengen von 2 bis 30 Gew.-%, vorzugsweise von 5 bis 20 Gew.-%, des Gesamtfeststoffgehalts. Letzteres kann auch allein vorteilhaft eingesetzt werden.

Es ist besonders vorteilhaft, das Wachs als wässerige bzw. als kationisch, anionisch oder/und sterisch stabilisierte Dispersion einzusetzen, weil es dann in der wässerigen Zusammensetzung leicht homogen verteilt gehalten werden kann. Vorzugsweise ist das mindestens eine Gleitmittel, das ggf. auch gleichzeitig ein Umformmittel sein kann, in einem Gehalt im Bereich von 0,1 bis 25 g/L und besonders bevorzugt in einem Gehalt im Bereich von 1 bis 15 g/L in der wässerigen Zusammensetzung enthalten.

Vorzugsweise enthält die wässerige Zusammensetzung mindestens einen organischen Korrosionsinhibitor e₃), insbesondere auf Basis von Amin(en), vorzugsweise mindestens ein Alkanolamin - vorzugsweise ein langkettiges Alkanolamin, mindestens ein TPA-Amin-Komplex wie Säureaddukt-4-oxo-4-p-tolyl-butyrat-4-Ethylmorpholin, mindestens ein Zinksalz von Aminocarboxylat, von 5-Nitro-Isophthalsäure oder von Cyansäure, mindestens ein polymeres Ammoniumsalz mit Fettsäure, mindestens ein Metallsalz einer Sulfonsäure wie Dodecyl-Naphthalinsulfonsäure, mindestens ein Amino- und Übergangsmetallkomplex der Toluolpropionsäure, 2-Mercapto-Benzothiazolyl-Bernsteinsäure bzw. mindestens eines ihrer Aminosalze, mindestens ein leitfähiges Polymer oder/und mindestens ein Thiol, wobei der Gehalt an organischen Korrosionsinhibitoren in der wässerigen Zusammensetzung vorzugsweise im Bereich von 0,01 bis 5 Gew.-% liegen kann, besonders bevorzugt im Bereich von 0,02 bis 3 Gew.-%, ganz besonders bevorzugt im Bereich von 0,05 bis 1,5 Gew.-%.

Der mindestens eine organische Korrosionsinhibitor ist vorzugsweise bei Raumtemperatur nicht leichtflüchtig. Ferner kann es vorteilhaft sein, wenn er in Wasser gut löslich oder/und in Wasser gut dispergierbar ist, insbesondere mit mehr als 20 g/L. Besonders bevorzugt sind u.a. Alkylaminoethanole wie Dimethylaminoethanol bzw. Komplexe auf Basis von einem TPA-Amin wie N-Ethylmorpholin-Komplex mit 4-Methyl-γ-oxo-benzolbutansäure. Dieser Korrosionsinhibitor kann zugesetzt werden, um eine stärkere Korrosionsinhibition zu bewirken oder noch weiter zu verstärken.

Vorzugsweise enthält die wässerige Zusammensetzung 0,1 bis 80 g/L des mindestens einen Korrosiosschutzpigments e₄). Hierzu gehören insbesondere verschiedene Silicate auf Basis von Aluminium-, Alumo-, Alumoerdalkali-und Erdalkalisilicaten. Die Korrosionsschutzpigmente weisen vorzugsweise einen mittleren Partikeldurchmesser gemessen an einem Rasterelektronenmikroskop im Bereich von 0,01 bis 0,5 µm Durchmesser auf, insbesondere im Bereich von 0,02 bis 0,3 µm. Die verschiedenen Arten Korrosionsschutzpigmente sind grundsätzlich bekannt. Ein Zusatz von mindestens einem dieser Pigmente scheint jedoch nicht grundsätzlich erforderlich zu sein, sondern ermöglicht alternative Ausführungsvarianten.

Die Mittel zur Neutralisation oder/und zur sterischen Stabilisation der Säuregruppen der Kunstharze mit einer Säurezahl insbesondere im Bereich von 5 bis 50 e₅) können unter anderem langflüchtige Alkanolamine und Hydroxide wie Natronlauge und Kalilauge sein, vorzugsweise jedoch schnellflüchtige Alkanolamine, Ammoniak und Verbindungen auf Basis Morpholin und Alkanolaminen. Sie bewirken, dass die neutralisierten Kunstharze wassermischbar werden bzw. sind bei einer Säurezahl ab etwa 150 auch wasserlöslich.

Bei dem erfindungsgemäßen Verfahren kann gegebenenfalls auch mindestens ein organisches Lösemittel e₆) zugesetzt werden. Als organisches Lösemittel für die organischen Polymere kann mindestens ein wassermischbarer oder/und wasserlöslicher Alkohol, ein Glykolether bzw. n-Methylpyrrolidon oder/und Wasser verwendet werden, im Falle der Verwendung eines Lösemittelgemisches insbesondere eine Mischung aus mindestens einem langkettigen Alkohol, wie z.B. Propylenglykol, ein Esteralkohol, ein Glykolether oder/und Butandiol mit Wasser. Vorzugsweise wird jedoch in vielen Fällen nur Wasser ohne jegliches organisches Lösemittel zugegeben. Bei Verwendung von organischem Lösemittel beträgt deren Gehalt vorzugsweise 0,1 bis 10 Gew.-%, insbesondere 0,25 bis 5 Gew.-%, ganz besonders bevorzugt 0,4 bis 3 Gew.-%. Für die Bandherstellung ist es bevorzugt, eher nur Wasser und fast keine oder keine organischen Lösemittel einzusetzen, evtl. außer geringen Mengen an Alkohol.

Außerdem kann es vorteilhaft sein, mindestens ein Netzmittel zuzusetzen, um den Naßfilm gleichmäßig in der flächigen Ausbreitung und in der Schichtdicke sowie dicht und ohne Fehlstellen aufbringen zu können. Grundsätzlich sind viele Netzmittel hierfür geeignet, vorzugsweise Acrylate, Silane, Polysiloxane, langkettige Alkohole, die die Oberflächenspannung der wässerigen Zusammensetzung herabsetzen. Besonders bevorzugt ist der Zusatz von mindestens einem Polysiloxan e₇).

Der Zusatz von mindestens einem Tensid e₉) kann helfen, die Benetzung des erfindungsgemäßen Zusammensetzung auf einer metallischen Oberfläche zu verbessern und die Beschichtung zu verbessern, insbesondere zu vergleichmäßigen. Hierbei kann eine deutliche Verbesserung insbesondere bei besondes rauen Oberflächen erreicht werden. Hierzu eignen sich sehr viele Arten Tenside, insbesondere nichtionische, kationische, amphotere und anionische Tenside. Ein geringer Zusatz im Bereich von 0,01 bis 0,4 g/L genügt oft.

Die erfindungsgemäßen Zusammensetzungen können darüber hinaus auch als Nachspüllösung eingesetzt werden, die auf eine vorhergehende Beschichtung wie z.B. einer Konversionsbeschichtung folgen. Als Konversionsbeschichtung können beispielsweise Beschichtungen auf Basis von mindestens einer organischen oder/und anorganischen Säure, gegebenenfalls mit weiteren Zusätzen, auf Basis einer Phosphatierung z.B. auf Basis von Eisen, Kalzium, Magnesium, Mangan oder/und Zink, hergestellt auf Basis einer Komplexfluorid-haltigen Lösung oder Dispersion, auf Basis von Phosphonat, auf Basis von mindestens einem Silan/Siloxan oder/und Polysiloxan oder/und auf Basis von Seltenerdverbindungen zuerst auf die metallischen Oberflächen aufgebracht werden. Derartige Lösungen bzw. Nachspüllösungen können daher insbesondere für den Blankkorrosionsschutz gut geeignet sein, bei dem kein Lack und keine Lack-ähnliche Beschichtung aufgebracht wird. Eine Konversionsbeschichtung auf Basis von Seltenerdverbindungen wie z.B. Cer-Oxid kann vor allem auf Al-, Mg-, Ti- oder/und Zn-reichen Oberflächen angewandt werden.

### Beispiele und Vergleichsbeispiele:

Die im folgenden beschriebenen Beispiele sollen den Gegenstand der Erfindung näher erläutern.

### A) Zusammensetzungen mit höherem Gehalt an Silanen:

Zur Vorbereitung von wässerigen Konzentraten wurde ein wässeriges Gemisch entsprechend Tabelle 1 für die noch nicht vorhydrolysierten Silane hergestellt, das bereits die Glacialessigsäure und Ethanol enthielt, indem mindestens ein Silan über wenigstens drei Tage bei Raumtemperatur im sauren Medium unter Rühren vorhydrolysiert wurde, soweit die einzusetzenden Silane nicht bereits vorhydrolysiert vorlagen. Danach wurde ggf. das bereits vorhydrolysiert vorliegende Silan zugesetzt, intensiv gerührt und ggf. bei Raumtemperatur zwischengelagert. Danach wurden die Konzentrate mit Wasser verdünnt und ggf. mit einem den pH-Wert anpassenden Mittel wie Ammoniak oder/und Glacialessigsäure versetzt, um einsatzbereite Behandlungsbäder zu gewinnen. Dann wurden jeweils mindestens 5 zuvor gereinigte Bleche aus kaltgewalztem Stahl (CRS) bzw. aus beidseitig feuerverzinktem Stahlblech durch Aufwalzen und Auftrocknen der entsprechenden Behandlungsflüssigkeit bei 25 °C in Kontakt gebracht. Dabei wurden die derart behandelten Bleche bei 90 °C PMT getrocknet und anschließend auf ihren Korrosionsschutz geprüft. Die Zusammensetzungen und Eigenschaften der Konzentrate und Behandlungsbäder sowie die Eigenschaften der Beschichtungen werden in den Tabellen 1 und 2 zusammengefaßt.

Die Silane A und B sind Fluor-frei, das Silan C ist Fluor-haltig. Das Silan A ist ein Amino-funktionelles Trialkoxysilan, das nur ca. zwei Stunden hydrolysiert wurde, bevor es der Zusammensetzung zugegeben wurde. Das Silan B ist ein Bis-trialkoxysilan, das ca. drei Tage hydrolysiert und gelagert wurde, bevor es der Zusammensetzung zugesetzt wurde. Das Silan C ist ein wasserlösliches Aminoalkyl-funktionelles Fluoralkylalkoxysilan, das nach sehr langer Zeit der Hydrolyse und der Lagerung erst der Zusammensetzung zugesetzt wurde. Diese Angaben charakterisieren den weitaus dominierenden Bestandteil der kommerziell erhältlichen Produkte. Die in der wässerigen Zusammensetzung (Konzentrat bzw. Bad) enthaltenen Silane sind Monomere, Oligomere, Polymere, Copolymere oder/und Reaktionsprodukte mit weiteren Komponenten aufgrund Hydrolysereaktionen, Kondensationsreaktionen oder/und weiteren Reaktionen. Die Reaktionen erfolgen vor allem in der Lösung, beim Trocknen bzw. gegebenenfalls Härten der Beschichtung. Der Begriff "Silan" wird hierbei für Silane, Silanole, Siloxane, Polysiloxane und deren Reaktionsprodukte bzw. Derivate benutzt, die oft "Silan"-Gemische sind. Alle Konzentrate und Bäder erwiesen sich über eine Woche stabil und ohne Veränderungen und ohne Ausfällungen. Es wurde kein Ethanol zugesetzt. Gehalte an Ethanol in den Zusammensetzungen rührten nur aus chemischen Reaktionen.

Das Polymer D ist ein thermoplastisches, gut verfilmendes Polymer auf Basis von Ethoxylat. Das Polymer E ist ein Polyethylen-Copolymer. Die SiO₂-Partikel wiesen eine mittlere Partikelgröße von etwa 200 nm auf. Dem Bad wurde Monoethanolamin oder/und Ammonikak zur Anpassung des pH-Werts zugesetzt. Außerdem wurde bei den Beispielen/Vergleichsbeispielen VB 10 und B 11 1 bis B 20 jeweils in einer Menge von etwa 0,1 g/L an nichtionisches Tensid zugesetzt. Dieser Tensidzusatz half bei der besseren Benetzung der gereinigten metallischen Oberfläche. Hierdurch wurde eine gleichmäßigere Filmausbildung insbesondere bei komplizierter geformten oder besonders rauen metallischen Oberflächen erzielt. Mit diesen Zusammensetzungen wurde eine Beschichtung mit einer Trockenfilmdicke von deutlich weniger als 1 µm erzeugt.

**Tabelle 1: Zusammensetzungen mit hohem Silan-Gehalt: Angaben für Konzentrate in g/L; Restgehalt Wasser**

| Beispiele/Vergleichsb. | VB 1 | VB 2 | VB 3 | B 4 | B 5 | B 6 | VB 7 | VB 8 | VB 9 | VB 10 | B 11 | B 12 | B 13 | B14 | B 15 | B16 | B 17 | B 18 | B 19 | B 20 |
|---|---|---|---|---|---|---|---|---|---|---|---|---|---|---|---|---|---|---|---|---|
| Organofunkt. Silan A | 46 | - | 46 | 23 | 46 | 59 | - | - | - | 92 | 92 | 92 | 92 | 92 | 92 | 92 | 92 | 92 | 92 | 92 |
| Organosilan B | - | 95 | 95 | 48 | 95 | 122 | - | - | - | 190 | 190 | 190 | 190 | 190 | 190 | 190 | 190 | 190 | 190 | 190 |
| F-Silan C | - | - | - | 4,3 | 8,5 | 1,7 | 4,3 | 8,5 | 17 | - | 17 | 34 | 102 | 17 | 34 | 17 | 17 | 34 | 34 | 17 |
| Polymer D | - | - | - | - | - | - | - | - | - | - | - | - | - | 100 | 200 | - | - | - | 200 | 100 |
| Polymer E | - | - | - | - | - | - | - | - | - | - | - | - | - | - | - | 100 | - | - | - | - |
| SiO₂-Partikel | - | - | - | - | - | - | - | - | - | - | - | - | - | - | - | - | - | - | - | - |
| Eisessig | 0,5 | 0,8 | 1,3 | 0,7 | 1,3 | 1,3 | 0,7 | 1,3 | 2,6 | kleine Mengen | | | | zugesetzt | | | dito | | | |
| Ethanol | 1,4 | 2,0 | 3,9 | 2,0 | 3,9 | 3,9 | 2,0 | 3,9 | 7,8 | kleine Mengen | | | | zugesetzt | | | dito | | | |

**Tabelle 2: Zusammensetzungen der Behandlungsbäder sowie Eigenschaften der ausgebildeten getrockneten Beschichtungen; Restgehalt Wasser; Angaben in g/L**

| Beispiele/Ver-gleichsb. | VB 1 | VB 2 | VB 3 | B 4 | B 5 | B 6 | VB 7 | VB 8 | VB 9 | VB 10 | B 11 | B 12 | B 13 | B 14 | B 15 | B 16 | B 17 | B 18 | B 19 | B 20 |
|---|---|---|---|---|---|---|---|---|---|---|---|---|---|---|---|---|---|---|---|---|
| Organofunkt. Silan A | 4,6 | - | 4,6 | 2,3 | 4,6 | 5,9 | - | - | - | 9,2 | 9,2 | 9,2 | 9,2 | 9,2 | 9,2 | 9,2 | 9,2 | 9,2 | 9,2 | 9,2 |
| Organosilan B | - | 9,5 | 9,5 | 4,8 | 9,5 | 12,2 | - | - | - | 19,0 | 19,0 | 19,0 | 19,0 | 19,0 | 19,0 | 19,0 | 19,0 | 19,0 | 19,0 | 19,0 |
| F-Silan C | - | - | - | 0,43 | 0,85 | 0,17 | 0,43 | 0,85 | 1,7 | - | 1,7 | 3,4 | 10,2 | 1,7 | 3,4 | 1,7 | 1,7 | 3,4 | 3,4 | 1,7 |
| Polymer D | - | - | - | - | - | - | - | - | - | - | - | - | - | 10 | 20 | - | - | - | 20 | 10 |
| Polymer E | - | - | - | - | - | - | - | - | - | - | - | - | - | - | - | 10 | - | - | - | - |
| SiO₂-Partikel | - | - | - | - | - | - | - | - | - | - | - | - | - | - | - | - | 0,5 | 0,5 | 0,5 | 5 |
| Eisessig | 0,05 | 0,08 | 0,13 | 0,07 | 0,13 | 0,13 | 0,07 | 0,13 | 0,26 | kleine Mengen | | | | zugesetzt | | | dito | | | |
| Ethanol | 0,14 | 0,20 | 0,39 | 0,20 | 0,39 | 0,39 | 0,20 | 0,39 | 0,78 | kleine Mengen | | | | zugesetzt | | | dito | | | |
| pH-Wert | 10,1 | 3,3 | 5,7 | 5,9 | 5,8 | 5,9 | 4,3 | 4,2 | 4,2 | 7,2 | 7,2 | 7,2 | 7,2 | 7,2 | 7,2 | 7,2 | 7,2 | 7,2 | 7,2 | 7,2 |
| Kontaktwinkel in ° | | | | | | | | | | | | | | | | | | | | |
| auf Stahlblechen | 88 | 35 | 76 | 106* | 117 | n.b. | n.b. | 114 | n.b. | n.b. | 115 | n.b. | n.b. | n.b. | n.b. | n.b. | n.b. | n.b. | n.b. | n.b. |
| auf HDG-Blechen | 94 | 83 | 94 | 104 | 128 | n.b. | n.b. | 123 | n.b. | n.b. | 122 | n.b. | n.b. | n.b. | n.b. | n.b. | n.b. | n.b. | n.b. | n.b. |
| Salzsprühtest: Blankkorrosion in Rᵢ-Werten nach | | | | | | | | | | | | | | | | | | | | |
| 1 h | 3 | 2 | 2,5 | 2 | <1 | 1 | n.b. | 3 | n.b. | 1,5 | << 1 | <<1 | << 1 | 0 | 0 | <1 | << 1 | << 1 | 0 | 0 |
| 5h | 5 | 5 | 5 | 4 | <3 | <3 | n.b. | 5 | n.b. | 4 | <2 | <1,5 | 1 | 1 | <1 | 2 | <2 | <1,5 | <1 | <1 |

| | | | | | | | | | | | | | | | | | | | | |
|---|---|---|---|---|---|---|---|---|---|---|---|---|---|---|---|---|---|---|---|---|
| * Ausreißer bei Kontaktwinkel-Messungen | | | | | | | | | | | | | | | | | | | | |

Die hierbei entstandenen Filme waren transparent, gleichmäßig und geschlossen. Sie zeigten außer bei VB 2 auf Stahlblech keine Einfärbung. Die Struktur, der Glanz und die Farbe der metallischen Oberfläche erschien durch die Beschichtung nur wenig verändert. Die Kombination von mehreren Silanen, unter denen ein etwas geringerer Anteil eines Fluor-haltigen Silans war, ergab eine sehr deutliche Verbesserung des Korrosionsschutzes, sogar bei einer vergleichsweise geringen Zusatzmenge an Fluor-haltigem Silan. Hierbei war keine weitere Beschichtung, also auch keine Primer- oder Lackschicht, auf die Silan-Beschichtung aufgetragen worden. Die Korrosionsschutzwerte gehen von 0 bis 5, wobei 5 die schlechtesten Werte wiedergibt. Die Auswahl der Systeme aus Fluor-freien Silanen oder/und aus Fluor-haltigem Silan hat sich bewährt, da alle diese Kombinationen sehr stabile Lösungen zeigten.

Die Schichtdicke der derart hergestellten Beschichtungen lag - auch von der Art des Auftrags, der anfangs variiert wurde - im Bereich von 0,02 bis 0,16 µm, meistens im Bereich von 0,02 bis 0,12 µm.

Der Kontaktwinkel wurde mit einem Gerät DIGIDROP Contact Angle Meter der Fa. GBX Scientific Instruments mit bidestilliertem Wasser- über 5 Messungen pro Blech gemessen. Je größer die Kontaktwinkel sind, desto hydrophober ist die Oberfläche. Das beschichtete Stahlblech beim Versuch VB 2 zeigte anders als die übrigen beschichteten Bleche die Farbe goldenen Rostes, was den Kontaktwinkel negativ beeinflußte. Darüber hinaus zeigte sich, dass der Kontaktwinkel nicht nur allein vom aufgetragenen Silan, sondern auch von den Auswirkungen der Oberflächenbehandlung wie z.B. dem pH-Wert bestimmt wurde. Es ergab sich überraschenderweise, dass bei diesen Versuchen eine erstaunlich strenge Korrelation auftrat zwischen der Hydrophobie der beschichteten Oberfläche, dem Kontaktwinkel und der Korrosionsbeständigkeit des Beschichtungssystems.

Es zeigte sich, dass es in vielen Fällen hilfreich ist, sowohl der Oberfläche der Beschichtung eine gewisse hydrophobe Eigenschaften - messbar anhand der Kontaktwinkel - zu verleihen, als auch darauf zu achten, dass die Beschichtung eine gewisse Dicke aufweist, um als Korrosionsschutzbarriere zu dienen. Die Silane verbesserten hierbei die Anbindung an die metallische Oberfläche.

Die hiermit erzeugten Beschichtungen sind vielfach geeignet, um mit Pulverlack oder mit Lösemittel-basiertem Lack beschichtet zu werden. Wasserbasierte Lackzusammensetzungen werden dagegen abgestoßen.

### B) Zusammensetzungen von Nachspüllösungen im wesentlichen auf Basis von Silanen:

Die wässerigen Lösungen wurden wie bei der Versuchsserie A) vorbereitet mit den Ausnahmen, dass die Zusammensetzungen entsprechend Tabelle 3 gewählt wurden und dass die konversionsbeschichteten Bleche auf Basis der Aluminiumlegierung AA 6063 durch Tauchen in die Badlösung über 1 Minute bei Raumtemperatur beschichtet wurden.

Die Bleche der Aluminiumlegierung AA 6063 wurden zuvor mit einer Konversionsbeschichtung auf Basis Cer-reicher Seltenerdverbindungen entsprechend WO-A1-01/71058 behandelt.

**Tabelle 3: Verwendung von Silan-reichen Lösungen als Nachspüllösungen im Vergleich zum Fehlen dieser bzw. zur Gelbchromatierung:**

| Beispiele/Vergleichsbeispiele | VB 21 | VB 22 | B 23 | VB 24 | VB 25 |
|---|---|---|---|---|---|
| Organofunkt. Silan A | - | - | 65,2 | - | - |
| Organosilan B | - | - | 134,8 | - | - |
| Organofunkt. Silan F | - | 20 | 20 | - | - |
| Nicht-funkt. Silan G | - | - | - | 50 | - |
| F-Silan C | - | 3,4 | 3,4 | 5,1 | - |
| Polymer D | - | - | 30 | - | - |
| Isopropanol | - | 100 | - | - | - |
| Nichtionisches Tensid | - | 0,5 | 0,5 | 0,5 | - |
| Eisessig | - | 5,8 | enthalten | enthalten | - |
| Ethanol | - | enthalten | enthalten | enthalten | - |
| Monoethanolamin | - | - | bis pH 7,2 | - | - |
| Wasser | - | 860 | 730 | 830 | n.b. |
| pH-Wert | - | 2,5 | 7,2 | 4,5 | n.b. |
| Nachspüllösung | ohne Nachspülen | s.o. | s.o. | s.o. | Gelbchromatierung |
| Salzsprühtest nach DIN 50021 SS über | | | | | |
| 24 h | i.O. | i.O. | i.O. | i.O. | i.O. |
| 96 h | 80-100 % bräunlichschwarz | i.O. | i.O., aber milchige Spuren | i.O. | i.O. |

Die Schichtdicken der erfindungsgemäßen Beschichtung hergestellt mit der Nachspüllösung betrugen 0,2 bis 0,3 µm. Die erfindungsgemäßen Beschichtungen waren transparent und leicht irisierend. Sie waren sehr gleichmäßig und haben die Korrosionsbeständigkeit der hierunter lagernden Konversionsbeschichtung auf Basis Cer-reicher Oxide sehr stark verbessert. Die erfindungsgemäß mit einer Nachspüllösung beschichteten Bleche der Beispiele VB 22, B 23 und B 24 hatten eine Korrosionsbeständigkeit vergleichbar einer klassischen Gelbchromatierung, ohne umweltschädliche Substanzen zu enthalten. Die Hoffnungen an die Verbesserung der Korrosionsbeständigkeit hatten sich stärker erfüllt als erwartet.

## Patentansprüche

1. Verfahren zur Beschichtung einer metallischen Oberfläche mit einer wässerigen, gegebenenfalls auch organisches Lösemittel und andere Komponenten enthaltenden Zusammensetzung, die weitgehend oder gänzlich von Chrom(VI)-Verbindungen frei ist, zur Vorbehandlung vor einer weiteren Beschichtung oder zur Behandlung, **dadurch gekennzeichnet, dass** die Zusammensetzung neben Wasser
b) eine Kombination aus mindestens einem funktionellen Trialkoxysilan, mindestens einem Aminosilan, mindestens einem Ureidosilan oder mindestens einem Vinylsilan, jeweils mit mindestens einem Bis-Trialkoxysilan, die jeweils fluorfrei und hydrolysierbar oder/und zumindest teilweise hydrolysiert sind, sowie
c) mindestens ein hydrolisierbares oder/und zumindest teilweise hydrolysiertes Fluor-haltiges Silan enthält,
wobei die Silane in der Zusammensetzung wasserlöslich sind oder insbesondere aufgrund von (weiteren) Hydrolyse- oder/und chemischen Reaktionen vor dem Auftragen auf die metallische Oberfläche wasserlöslich werden,
wobei die saubere, gebeizte, gereinigte oder/und vorbehandelte metallische Oberfläche mit der wässerigen Zusammensetzung in Kontakt gebracht und ein Film auf der metallischen Oberfläche ausgebildet wird, der anschließend getrocknet wird und ggf. zusätzlich ausgehärtet wird,
wobei der getrocknete und ggf. auch ausgehärtete Film eine Schichtdicke im Bereich von 0,001 bis 10 µm aufweist.

2. Verfahren nach Anspruch 1, **dadurch gekennzeichnet, dass** mindestens ein Fluor-freies Silan enthalten ist ausgewählt aus der Gruppe von oder auf Basis von
Glycidoxyalkyltrialkoxysilan,
Methacryloxyalkyltrialkoxysilan,
(Trialkoxysilyl)alkylbernsteinsäuresilan,
Aminoalkylaminoalkylalkyldialkoxysilan,
(Epoxycycloalkyl)alkyltrialkoxysilan,
Bis-(trialkoxysilylalkyl)amin,
Bis-(trialkoxysilyl)ethan,
(Epoxyalkyl)trialkoxysilan,
Aminoalkyltrialkoxysilan,
Ureidoalkyltrialkoxysilan,
N-(trialkoxysilylalkyl)alkylendiamin,
N-(aminoalkyl)aminoalkyltrialkoxysilan,
N-(trialkoxysilylalkyl)dialkylentriamin,
Poly(aminoalkyl)alkyldialkoxysilan,
Tris(trialkoxysilyl)alkylisocyanurat,
Ureidoalkyltrialkoxysilan und.

3. Verfahren nach einem der vorstehenden Ansprüche, **dadurch gekennzeichnet, dass** mindestens ein Silan enthalten ist ausgewählt aus der Gruppe von oder auf Basis von
3-Glycidoxypropyltriethoxysilan, 3-Glycidoxypropyltrimethoxysilan,
3-Methacryloxypropyltriethoxysilan,
3-Methacryloxypropyltrimethoxysilan,
3-(Triethoxysilyl)propylbernsteinsäuresilan,
Aminoethylaminopropylmethyldiethoxysilan,
Aminoethylaminopropylmethyldimethoxysilan,
Beta-(3,4-Epoxycyclohexyl)ethyltriethoxysilan,
Beta-(3,4-Epoxycyclohexyl)ethyltrimethoxysilan,
Beta-(3,4-Epoxycyclohexyl)methyltriethoxysilan,
Beta-(3,4-Epoxycyclohexyl)methyltrimethoxysilan,
Gamma-(3,4-Epoxycyclohexyl)propyltriethoxysilan,
Gamma- (3,4-Epoxycyclohexyl)propyltrimethoxysilan,
Bis(triethoxysilylpropyl)amin,
Bis(trimethoxysilylpropyl)amin,
(3,4-Epoxybutyl)triethoxysilan,
(3,4-Epoxybutyl)trimethoxysilan,
Gamma-Aminopropyltriethoxysilan,
Gamma-Aminopropyltrimethoxysilan,
Gamma-Ureidopropyltrialkoxysilan,
N-(3-(trimethoxysilyl)propyl)ethylendiamin,
N-beta-(aminoethyl)-gamma-aminopropyltriethoxysilan,
N-beta-(aminoethyl)-gamma-aminopropyltrimethoxysilan,
N-(gamma-triethoxysilylpropyl)diethylentriamin,
N-(gamma-trimethoxysilylpropyl)diethylentriamin,
N-(gamma-triethoxysilylpropyl)dimethylentriamin,
N-(gamma-trimethoxysilylpropyl)dimethylentriamin,
Poly(aminoalkyl)ethyldialkoxysilan,
Poly(aminoalkyl)methyldialkoxysilan,
Tris(3-(triethoxysilyl)propyl)isocyanurat
Tris(3-(trimethoxysilyl)propyl)isocyanurat und
Vinyltriacetoxysilan.

4. Verfahren nach einem der vorstehenden Ansprüche, **dadurch gekennzeichnet, dass** in der wässerigen Zusammensetzung ausgewählt aus den Fluor-haltigen Silanen jeweils mindestens ein Acyloxysilan, ein Alkoxysilan, ein Silan mit mindestens einer Aminogruppe wie ein Aminoalkylsilan, ein Silan mit mindestens einer Bernsteinsäuregruppe oder/und Bernsteinsäureanhydridgruppe, ein Bis-Silyl-Silan, ein Silan mit mindestens einer Epoxygruppe wie ein Glycidoxysilan, ein (Meth)acrylato-Silan, ein Multi-Silyl-Silan, ein Ureidosilan, ein Vinylsilan oder/und mindestens ein Silanol oder/und mindestens ein Siloxan bzw. Polysiloxan von chemisch entsprechender Zusammensetzung wie die zuvor genannten Silane enthalten ist, das jeweils mindestens eine Gruppe mit mindestens einem Fluoratom enthält.

5. Verfahren nach einem der Ansprüche 1 oder 4, **dadurch gekennzeichnet, dass** die wässerige Zusammensetzung mindestens ein Fluoralkoxyalkylsilan, mindestens ein mono-, di- oder trifunktionelles Fluorsilan, mindestens ein Mono-, Bis- oder Tris-Fluorsilan, mindestens ein Fluorsilan auf Basis Ethoxysilan oder/und auf Basis Methoxysilan oder/und mindestens ein Fluorsilan mit mindestens einer funktionellen Gruppe wie z.B. einer Aminogruppe insbesondere als Cokondensat enthält, wie z.B. ein Fluoralkyldialkoxysilan, ein Fluoraminoalkylpropyltrialkoxysilan, ein Fluormethansulfonat, ein Fluorpropylalkyldialkoxysilan, ein Triphenylfluorsilan, ein Trialkoxyfluorsilan, ein Trialkylfluorsilan oder/und ein Tridecafluorooctyltrialkoxysilan.

6. Verfahren nach einem der Ansprüche 1, 4 oder 5, **dadurch gekennzeichnet, dass** das Silan mindestens zwei Aminogruppen sowie mindestens eine Ethyl- oder/und mindestens eine Methylgruppe enthält.

7. Verfahren nach einem der vorstehenden Ansprüche, **dadurch gekennzeichnet, dass** die wässerige Zusammensetzung auch mindestens ein Metallchelat oder/und mindestens ein Oligomer/Polymer/Copolymer (Komponenten c) bzw. d)) enthält.

8. Verfahren nach einem der vorstehenden Ansprüche, **dadurch gekennzeichnet, dass** in der wässerigen Zusammensetzung auch mindestens eine Komponente e) ausgewählt aus der Gruppe von:
e₁) mindestens einer anorganischen Verbindung in Partikelform mit einem mittleren Partikeldurchmesser gemessen an einem Rasterelektronenmikroskop im Bereich von 0,005 bis zu 0,3 µm Durchmesser,
e₂) mindestens einem Gleitmittel,
e₃) mindestens einem organischen Korrosionsinhibitor,
e₄) mindestens ein Korrosionsschutzpigment,
e₅) mindestens einem Mittel zur Neutralisation oder/und zur sterischen Stabilisation der Kunstharze,
e₆) mindestens ein organisches Lösemittel,
e₇) mindestens ein Siloxan,
e₈) mindestens einen langkettigen Alkohol und
e₉) mindestens ein Tensid
enthalten ist.

9. Verfahren nach einem der vorstehenden Ansprüche, **dadurch gekennzeichnet, dass** der organische Filmbildner ein Kunstharzgemisch aus mindestens einem Polymer oder/und mindestens einem Copolymerisat ist, das einen Gehalt an Kunstharz auf Basis Acrylat, Epoxid, Ethylen, Harnstoff-Formaldehyd, Phenol, Polyester, Polyurethan, Styrol, Styrolbutadien oder/und Vinyl enthält.

10. Verfahren nach einem der vorstehenden Ansprüche, **dadurch gekennzeichnet, dass** der organische Filmbildner als Kunstharz auch einen Gehalt an organischem Polymer, Copolymer oder/und deren Mischungen auf der Basis von Polyethylenimin, Polyvinylalkohol, Polyvinylphenol, Polyvinylpyrrolidon oder/und Polyasparaginsäure, insbesondere Copolymere mit einer Phosphor enthaltenden Vinylverbindung, enthält.

11. Verfahren nach einem der vorstehenden Ansprüche, **dadurch gekennzeichnet, dass** die Säuregruppen der Kunstharze mit Ammoniak, mit Aminen wie z.B. Morpholin, Dimethylethanolamin, Diethylethanolamin oder Triethanolamin oder/und mit Alkalimetallverbindungen wie z.B. Natriumhydroxid stabilisiert sind.

12. Verfahren nach einem der vorstehenden Ansprüche, **dadurch gekennzeichnet, dass** die wässerige Zusammensetzung 0,1 bis 980 g/L des organischen Filmbildners enthält, vorzugsweise 2 bis 600 g/L.

13. Verfahren nach einem der vorstehenden Ansprüche, **dadurch gekennzeichnet, dass** der Gehalt an mindestens einem Fluor-freien Silan in der wässerigen Zusammensetzung einschließlich der hieraus entstehenden Reaktionsprodukte vorzugsweise 0,05 bis 300 g/L beträgt.

14. Verfahren nach einem der vorstehenden Ansprüche, **dadurch gekennzeichnet, dass** der Gehalt an mindestens einem Fluor-haltigen Silan in der wässerigen Zusammensetzung einschließlich der hieraus entstehenden Reaktionsprodukte vorzugsweise 0,01 bis 150 g/L beträgt.

15. Verfahren nach einem der vorstehenden Ansprüche, **dadurch gekennzeichnet, dass** der mindestens eine Metallchelat ausgewählt ist aus Chelatkomplexen auf Basis von Acetylacetonaten, Acetessigestem, Acetonaten, Alkylendiaminen, Aminen, Lactaten, Carbonsäuren, Citraten oder/und Glykolen, wobei der Gehalt an mindestens einem Chelat in der wässerigen Zusammensetzung einschließlich der ggf. hieraus entstehenden Reaktionsprodukte vorzugsweise 0,1 bis 80 g/L beträgt.

16. Verfahren nach einem der vorstehenden Ansprüche, **dadurch gekennzeichnet, dass** als anorganische Verbindung in Partikelform ein feinverteiltes Pulver, eine Dispersion oder eine Suspension wie z.B. ein Carbonat, Oxid, Silicat oder Sulfat zugesetzt wird, insbesondere kolloidale oder/und amorphe Partikel.

17. Verfahren nach einem der vorstehenden Ansprüche, **dadurch gekennzeichnet, dass** als anorganische Verbindung in Partikelform Partikel auf Basis von mindestens einer Verbindung des Aluminiums, Bariums, Cers, Kalziums, Lanthans, Siliciums, Titans, Yttriums, Zinks oder/und Zirkoniums zugesetzt werden.

18. Verfahren nach einem der vorstehenden Ansprüche, **dadurch gekennzeichnet, dass** als Gleitmittel mindestens ein Wachs ausgewählt aus der Gruppe der Paraffine, Polyethylene und Polypropylene verwendet wird, insbesondere ein oxidiertes Wachs, wobei der Gehalt an Wachsen in der wässerigen Zusammensetzung vorzugsweise im Bereich von 0,01 bis 5 Gew.-% liegt.

19. Verfahren nach einem der vorstehenden Ansprüche, **dadurch gekennzeichnet, dass** die Beschichtung teilweise durch Trocknen und Verfilmen hergestellt wird oder/und durch aktinische Strahlung, kationische Polymerisation oder/und thermisches Vernetzen zum Aushärten gebracht wird.

20. Verfahren nach einem der vorstehenden Ansprüche, **dadurch gekennzeichnet, dass** die wässerige Zusammensetzung mindestens ein Additiv enthält, insbesondere mindestens eines ausgewählt aus der Gruppe von mindestens einem Biozid, mindestens einem Entschäumer oder/und mindestens einem Netzmittel.

21. Verfahren nach einem der vorstehenden Ansprüche, **dadurch gekennzeichnet, dass** die beschichtete metallische Oberfläche bei einer Temperatur im Bereich von 20 bis 400 °C Umlufttemperatur getrocknet wird.

22. Verfahren nach einem der vorstehenden Ansprüche, **dadurch gekennzeichnet, dass** die wässerige Zusammensetzung durch Aufwalzen, Fluten, Aufrakeln, Spritzen, Sprühen, Streichen oder Tauchen und ggf. durch nachfolgendes Abquetschen mit einer Rolle aufgetragen wird.

23. Verfahren nach einem der vorstehenden Ansprüche, **dadurch gekennzeichnet, dass** auf den getrockneten und ggf. auch ausgehärteten Film jeweils mindestens eine Beschichtung aus Druckfarbe, Folie, Lack, lackähnlichem Material, Pulverlack, Klebstoff oder/und Klebstoffträger aufgebracht wird.

24. Verfahren nach einem der vorstehenden Ansprüche, **dadurch gekennzeichnet, dass** die beschichteten Metallteile, Bänder oder Bandabschnitte umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden werden.

25. Wässerige Zusammensetzung zur Vorbehandlung einer metallischen Oberfläche vor einer weiteren Beschichtung oder zur Behandlung jener Oberfläche, **dadurch gekennzeichnet, dass** die Zusammensetzung neben
a) eine Kombination aus mindestens einem funktionellen Trialkoxysilan, mindestens einem Aminosilan, mindestens einem Ureidosilan oder mindestens einem Vinylsilan jeweils, mit mindestens einem Bis-Trialkoxysilan, die jeweils fluorfrei und hydrolysierbar oder/und zumindest teilweise hydrolysiert sind, sowie
b) mindestens ein hydrolisierbares oder/und zumindest teilweise hydrolysiertes Fluor-haltiges Silan enthält,
wobei das Mengenverhältnis von a) zu b) jeweils einschließlich der hieraus entstehenden Reaktionsprodukte vorzugsweise im Bereich von 1 : 0,01 bis 1 : 4 liegt und
wobei die Silane in der Zusammensetzung wasserlöslich sind oder insbesondere aufgrund von (weiteren) Hydrolyse- oder/und chemischen Reaktionen wasserlöslich werden.

26. Verwendung der nach dem Verfahren gemäß mindestens einem der vorstehenden Ansprüche 1 bis 24 beschichteten Substrate als Draht, Band, Blech oder Teil für eine Drahtwicklung, ein Drahtgeflecht, ein Stahlband, ein Blech, eine Verkleidung, eine Abschirmung, eine Karosserie oder ein Teil einer Karosserie, ein Teil eines Fahrzeugs, Anhängers, Wohnmobils oder Flugkörpers, eine Abdeckung, ein Gehäuse, eine Lampe, eine Leuchte, ein Ampelelement, ein Möbelstück oder Möbelelement, ein Element eines Haushaltsgeräts, ein Gestell, ein Profil, ein Formteil komplizierter Geometrie, ein Leitplanken-, Heizkörper- oder Zaunelement, eine Stoßstange, ein Teil aus oder mit mindestens einem Rohr oder/und einem Profil, ein Fenster-, Tür- oder Fahrradrahmen oder ein Kleinteil wie eine Schraube, Mutter, Flansch, Feder oder ein Brillengestell.

27. Verwendung der Zusammensetzung nach mindestens einem der Ansprüche 1 bis 26 als Nachspüllösung, die auf eine vorhergehende Beschichtung wie z.B. auf eine Konversionsbeschichtung aufgebracht wird, oder/und als Zusammensetzung für den Blankkorrosionsschutz.

## Claims

1. A process for coating a metallic surface with an aqueous composition, also comprising, if desired, organic solvent and other components, which is substantially or entirely free from chromium(VI) compounds, for the purpose of pretreatment prior to a further coating or for treatment, which process is **characterized in that** the composition comprises, besides water,
b) a combination of at least one functional trialkoxysilane, at least one aminosilane, at least one ureidosilane or at least one vinylsilane, in each case with at least one bis-trialkoxysilane, which in each case are fluorine-free and hydrolyzable and/or at least partly hydrolyzed, and also
c) at least one hydrolyzable and/or at least partly hydrolyzed fluorine-containing silane,
the silanes in the composition being water-soluble or becoming water-soluble in particular by virtue of (further) hydrolysis reactions and/or chemical reactions prior to application to the metallic surface,
the clean, pickled, cleaned and/or pretreated metallic surface being contacted with the aqueous composition and a film being formed on the metallic surface and subsequently dried and, if desired, additionally cured, the dried and, where appropriate, also cured film having a thickness in the range from 0.001 to 10 µm.

2. Process according to claim 1, **characterized in that** there is at least one fluorine-free silane selected from the group consisting of, or based on,
glycidyloxyalkyltrialkoxysilane,
methacryloyloxyalkyltrialkoxysilane,
(trialkoxysilyl)alkylsuccinoylsilane,
aminoalkylaminoalkylalkyldialkoxysilane,
(epoxycycloalkyl)alkyltrialkoxysilane,
bis(trialkoxysilylalkyl)amine,
bis(trialkoxysilyl)ethane,
(epoxyalkyl)trialkoxysilane,
aminoalkyltrialkoxysilane,
ureidoalkyltrialkoxysilane,
N-(trialkoxysilylalkyl)alkylenediamine,
N-(aminoalkyl)aminoalkyltrialkoxysilane,
N-(trialkoxysilylalkyl)dialkylenetriamine,
poly(aminoalkyl)alkyldialkoxysilane,
tris(trialkoxysilyl)alkyl isocyanurate,
ureidoalkyltrialkoxysilane and

3. Process according to one of the above claims, **characterized in that** there is at least one silane selected from the group consisting of, or based on,
3-glycidyloxypropyltriethoxysilane,
3-glycidyloxypropyltrimethoxysilane,
3-methacryloyloxypropyltriethoxysilane,
3-methacryloyloxypropyltrimethoxysilane,
3-(triethoxysilyl)propylsuccinoylsilane,
aminoethylaminopropylmethyldiethoxysilane,
aminoethylaminopropylmethyldimethoxysilane,
beta-(3,4-epoxycyclohexyl)ethyltriethoxysilane,
beta-(3,4-epoxycyclohexyl)ethyltrimethoxysilane,
beta-(3,4-epoxycyclohexyl)methyltriethoxysilane,
beta-(3,4-epoxycyclohexyl)methyltrimethoxysilane,
gamma-(3,4-epoxycyclohexyl)propyltriethoxysilane,
gamma-(3,4-epoxycyclohexyl)propyltrimethoxysilane,
bis(triethoxysilylpropyl)amine,
bis(trimethoxysilylpropyl)amine,
(3,4-epoxybutyl)triethoxysilane,
(3,4-epoxybutyl)trimethoxysilane,
gamma-aminopropyltriethoxysilane,
gamma-aminopropyltrimethoxysilane,
gamma-ureidopropyltrialkoxysilane,
N-(3-(trimethoxysilyl)propyl)ethylenediamine,
N-beta-(aminoethyl)-gamma-aminopropyltriethoxysilane,
N-beta-(aminoethyl)-gamma-aminopropyltrimethoxysilane,
N-(gamma-triethoxysilylpropyl)diethylenetriamine,
N-(gamma-trimethoxysilylpropyl)diethylenetriamine,
N-(gamma-triethoxysilylpropyl)dimethylenetriamine,
N-(gamma-trimethoxysilylpropyl)dimethylenetriamine,
poly(aminoalkyl)ethyldialkoxysilane,
poly(aminoalkyl)methyldialkoxysilane,
tris(3-(triethoxysilyl)propyl) isocyanurate,
tris(3-(trimethoxysilyl)propyl) isocyanurate and vinyltriacetoxysilane.

4. Process according to one of the above claims, **characterized in that** in the aqueous composition selected from the fluorine-containing silanes there is in each case at least one acyloxysilane, alkoxysilane, silane having at least one amino group such as an aminoalkylsilane, silane having at least one succinic acid group and/or succinic anhydride group, bis-silyl-silane, silane having at least one epoxy group such as a glycidyloxysilane, (meth)acrylato-silane, multi-silyl-silane, ureidosilane, vinylsilane and/or at least one silanol and/or at least one siloxane or polysiloxane whose composition corresponds chemically to that of the aforementioned silanes, containing in each case at least one group that contains at least one fluorine atom.

5. Process according to one of claims 1 or 4, **characterized in that** the aqueous composition comprises at least one fluoroalkoxyalkylsilane, at least one mono-, di- or trifunctional fluorosilane, at least one mono-, bis- or tris-fluorosilane, at least one fluorosilane based on ethoxysilane and/or based on methoxysilane and/or at least one fluorosilane having at least one functional group such as, for example, an amino group, in particular in the form of a cocondensate, such as, for example, a fluoroalkyldialkoxysilane, a fluoroaminoalkylpropyltrialkoxysilane, a fluoromethanesulfonate, a fluoropropylalkyldialkoxysilane, a triphenylfluorosilane, a trialkoxyfluorosilane, a trialkylfluorosilane and/or a tridecafluorooctyltrialkoxysilane.

6. Process according to one of claims 1, 4 or 5, **characterized in that** the silane contains at least two amino groups and also at least one ethyl group and/or at least one methyl group.

7. Process according to one of the above claims, **characterized in that** the aqueous composition also comprises at least one metal chelate and/or at least one oligomer/polymer/copolymer (components c) and d) respectively).

8. Process according to one of the above claims, **characterized in that** in the aqueous composition there is also at least one component e) selected from the group consisting of:
e₁) at least one inorganic compound in particle form, having an average particle diameter, measured on a scanning electron microscope, in the range from 0.005 to 0.3 µm in diameter,
e₂) at least one lubricant,
e₃) at least one organic corrosion inhibitor,
e₄) at least one anti-corrosion pigment,
e₅) at least one agent for neutralizing and/or sterically stabilizing the synthetic resins,
e₆) at least one organic solvent,
e₇) at least one siloxane,
e₈) at least one long-chain alcohol, and
e₉) at least one surfactant.

9. Process according to one of the above claims, **characterized in that** the organic film former is a synthetic resin mixture of at least one polymer and/or at least one copolymer, comprising synthetic resin based on acrylate, epoxide, ethylene, ureaformaldehyde, phenol, polyester, polyurethane, styrene, styrene-butadiene and/or vinyl.

10. Process according to one of the above claims, **characterized in that** the organic film former also comprises as synthetic resin a content of organic polymer, copolymer and/or mixtures thereof based on polyethyleneimine, polyvinyl alcohol, polyvinylphenol, polyvinylpyrrolidone and/or polyaspartic acid, in particular copolymers with a phosphorus-containing vinyl compound.

11. Process according to one of the above claims, **characterized in that** the acid groups of the synthetic resins are stabilized with ammonia, with amines such as morpholine, dimethylethanolamine, diethylethanolamine or triethanolamine and/or with alkali-metal compounds such as sodium hydroxide.

12. Process according to one of the above claims, **characterized in that** the aqueous composition contains from 0.1 to 980 g/l of the organic film former, preferably from 2 to 600 g/l.

13. Process according to one of the above claims, **characterized in that** the amount of at least one fluorine-free silane in the aqueous composition, including the reaction products formed therefrom, is preferably from 0.05 to 300 g/l.

14. Process according to one of the above claims, **characterized in that** the amount of at least one fluorine-containing silane in the aqueous composition, including the reaction products formed therefrom, is preferably from 0.01 to 150 g/l.

15. Process according to one of the above claims, **characterized in that** the at least one metal chelate is selected from chelate complexes based on acetylacetonates, acetoacetic esters, acetonates, alkylenediamines, amines, lactates, carboxylic acids, citrates and/or glycols, the amount of at least one chelate in the aqueous composition, including any reaction products formed therefrom, being preferably from 0.1 to 80 g/l.

16. Process according to one of the above claims, **characterized in that** as inorganic compound in particle form a finely divided powder, a dispersion or a suspension such as a carbonate, oxide, silicate or sulfate is added, especially colloidal and/or amorphous particles.

17. Process according to one of the above claims, **characterized in that** as inorganic compound in particle form particles are added based on at least one compound of aluminium, of barium, of cerium, of calcium, of lanthanum, of silicon, of titanium, of yttrium, of zinc and/or of zirconium.

18. Process according to one of the above claims, **characterized in that** as lubricant at least one wax is used selected from the group consisting of paraffins, polyethylenes and polypropylenes, in particular an oxidized wax, the amount of waxes in the aqueous composition being preferably in the range from 0.01 to 5% by weight.

19. Process according to one of the above claims, **characterized in that** the coating is partly produced by drying and filming and/or is cured by actinic radiation, cationic polymerization and/or thermal crosslinking.

20. Process according to one of the above claims, **characterized in that** the aqueous composition comprises at least one additive, in particular at least one selected from the group consisting of at least one biocide, at least one defoamer and/or at least one wetting agent.

21. Process according to one of the above claims, **characterized in that** the coated metallic surface is dried at a temperature in the range from 20 to 400°C forced-air temperature.

22. Process according to one of the above claims, **characterized in that** the aqueous composition is applied by rolling, flow coating, knife coating, spraying, squirting, brushing or dipping and if desired by subsequent squeezing off with a roller.

23. Process according to one of the above claims, **characterized in that** in each case at least one coating of printing ink, film, paint, paint-like material, powder coating material, adhesive and/or adhesive backing is applied to the dried and also, where appropriate, cured film.

24. Process according to one of the above claims, **characterized in that** the coated metal parts, strips or strip sections are formed, painted, coated with polymers such as PVC, for example, printed, bonded, hot-soldered, welded and/or joined with one another or with other elements by clinching or other joining techniques.

25. An aqueous composition for pretreating a metallic surface prior to a further coating or for treating the said surface, **characterized in that** the composition comprises, besides water,
a) a combination of at least one functional trialkoxysilane, at least one aminosilane, at least one ureidosilane or at least one vinylsilane, in each case with at least one bis-trialkoxysilane, which in each case are fluorine-free and hydrolyzable and/or at least partly hydrolyzed, and also
b) at least one hydrolyzable and/or at least partly hydrolyzed fluorine-containing silane,
the proportion of a) to b) in each case including the reaction products formed therefrom being preferably in the range from 1:0.01 to 1:4, and
the silanes in the composition being water-soluble or in particular water-soluble owing to (further) hydrolysis reactions and/or chemical reactions.

26. The use of the substrates coated by the process according to at least one of claims 1 to 24 above as wire, strip, sheet or part for a wire winding, a wire mesh, a steel strip, a metal sheet, a panel, a shield, a vehicle body or part of a vehicle body, a part of a vehicle, trailer, mobile home or missile, a cover, a casing, a lamp, a light, a traffic light element, a furniture item or furniture element, an element of a household appliance, a frame, a profile, a moulding of complex geometry, a guideboard element, radiator element or fencing element, a bumper, a part of or with at least one pipe and/or profile, a window frame, door frame or cycle frame or a small part such as a bolt, nut, flange, spring or a spectacle frame.

27. The use of the composition according to at least one of claims 1 to 26 as an after-rinse solution, which is applied to a previous coating such as, for example, to a conversion coating, and/or as a composition for bright corrosion protection.

## Revendications

1. Procédé de revêtement d'une surface métallique au moyen d'une composition aqueuse, qui peut également contenir, en option, un solvant organique et d'autres composants, mais qui ne contient pratiquement pas ou absolument pas de composés du chrome-VI, en tant que traitement préalable à une autre opération de revêtement ou en tant que traitement, lequel procédé est **caractérisé en ce que** la composition comprend, outre de l'eau :
a) une combinaison comportant au moins un trialcoxy-silane fonctionnalisé, au moins un amino-silane, au moins un uréido-silane ou au moins un vinyl-silane, avec dans chaque cas au moins un bis(trialcoxy-silane), lesquels sont chacun non-fluorés et hydrolysables et/ou au moins partiellement hydrolysés,
b) et au moins un silane fluoré et hydrolysable et/ou au moins partiellement hydrolysé,
étant entendu
que les silanes présents dans la composition sont solubles dans l'eau, ou deviennent solubles dans l'eau, notamment en raison de réactions chimiques et/ou de leur hydrolyse, le cas échéant supplémentaire, avant le dépôt sur la surface métallique,
que l'on met la surface métallique propre, décapée, nettoyée et/ou prétraitée en contact avec la composition aqueuse et qu'il se forme alors sur cette surface métallique un film que l'on fait ensuite sécher, et en outre durcir le cas échéant,
et que le film séché, et durci le cas échéant, est épais de 0,001 à 10 µm.

2. Procédé conforme à la revendication 1, **caractérisé en ce qu'**il y a au moins un silane non-fluoré qui est choisi dans l'ensemble formé par les suivants ou qui est à base de l'un des suivants :
glycidyloxyalkyl-trialcoxy-silane,
méthacryloxyalkyl-trialcoxy-silane,
(trialcoxy-silyl)alkyl-succinate-silane,
aminoalkylaminoalkyl-alkyl-dialcoxy-silane,
(époxycycloalkyl)alkyl-trialcoxy-silane,
bis(trialcoxy-silyl-alkyl)-amine,
bis(trialcoxy-silyl)-éthane,
(époxyalkyl)-trialcoxy-silane
aminoalkyl-trialcoxy-silane,
uréidoalkyl-trialcoxy-silane,
N-(trialcoxysilyl-alkyl)-alkylènediamine,
N-(aminoalkyl)-aminoalkyl-trialcoxy-silane,
N-(trialcoxysilyl-alkyl)-dialkylènetriamine,
poly(aminoalkyl)alkyl-dialcoxy-silane,
et tris[(trialcoxy-silyl)-alkyl]-isocyanurate.

3. Procédé conforme à l'une des revendications précédentes, **caractérisé en ce qu'**il y a au moins un silane qui est choisi dans l'ensemble formé par les suivants ou qui est à base de l'un des suivants :
3-glycidyloxypropyl-triéthoxy-silane,
3-glycidyloxypropyl-triméthoxy-silane,
3-méthacryloxypropyl-triéthoxy-silane,
3-méthacryloxypropyl-triméthoxy-silane,
3-(triéthoxy-silyl)propyl-succinate-silane,
aminoéthylaminopropyl-méthyl-diéthoxy-silane,
aminoéthylaminopropyl-méthyl-diméthoxy-silane,
β-(3,4-époxy-cyclohexyl)éthyl-triéthoxy-silane,
β-(3,4-époxy-cyclohexyl)éthyl-triméthoxy-silane,
(3,4-époxy-cyclohexyl)méthyl-triéthoxy-silane,
(3,4-époxy-cyclohexyl)méthyl-triéthoxy-silane,
γ-(3,4-époxy-cyclohexyl)propyl-triéthoxy-silane,
γ-(3,4-époxy-cyclohexyl)propyl-triméthoxy-silane,
bis(triéthoxy-silyl-propyl)-amine,
bis(triméthoxy-silyl-propyl)-amine,
(3,4-époxy-butyl)-triéthoxy-silane,
(3,4-époxy-butyl)-triméthoxy-silane,
γ-aminopropyl-triéthoxy-silane,
γ-aminopropyl-triméthoxy-silane,
γ-uréidopropyl-trialcoxy-silane,
N-[3-(triméthoxysilyl)-propyl]-éthylènediamine,
[N-(β-aminoéthyl)-γ-aminopropyl]-triéthoxy-silane,
[N-(β-aminoéthyl)-γ-aminopropyl]-triméthoxy-silane,
N-[γ-(triéthoxysilyl)-propyl]-diéthylènetriamine,
N-[γ-(triméthoxysilyl)-propyl]-diéthylènetriamine,
N-[γ-(triéthoxysilyl)-propyl]-diméthylènetriamine,
N-[γ-(triméthoxysilyl)-propyl]-diméthylènetriamine,
poly(aminoalkyl)éthyl-dialcoxy-silane,
poly(aminoalkyl)méthyl-dialcoxy-silane,
tris[3-(triéthoxy-silyl)-propyl]-isocyanurate,
tris[3-(triméthoxy-silyl)-propyl]-isocyanurate,
et vinyl-triacétoxy-silane.

4. Procédé conforme à l'une des revendications précédentes, **caractérisé en ce qu'**il y a, contenu dans la composition aqueuse et choisi parmi les silanes fluorés, au moins un acyloxy-silane, un alcoxy-silane, un silane comportant au moins un groupe amino, tel un aminoalkyl-silane, un silane comportant au moins un groupe succinate et/ou un groupe anhydride succinique, un bis(silyl)-silane, un silane comportant au moins un groupe époxy, tel un glycidyloxy-silane, un acrylato-silane ou méthacrylato-silane, un multi(silyl)-silane, un uréido-silane, un vinyl-silane et/ou au moins un silanol et/ou au moins un siloxane ou polysiloxane de composition chimiquement correspondante à celle des silanes mentionnés ci-dessus, étant entendu que ces silanes comportent dans chaque cas au moins un groupe contenant au moins un atome de fluor.

5. Procédé conforme à l'une des revendications 1 et 4, **caractérisé en ce que** la composition aqueuse contient au moins un fluoro-alcoxy-alkyl-silane, au moins un fluorosilane monofonctionnel, difonctionnel ou trifonctionnel, au moins un monofluorosilane, bis-fluoro-silane ou tris-fluorosilane, au moins un fluorosilane à base d'éthoxy-silane et/ou de méthoxy-silane, et/ou au moins un fluorosilane comportant au moins un groupe fonctionnel, tel par exemple un groupe amino, en particulier sous forme de co-condensat, comme par exemple un fluoro-alkyl-dialcoxy-silane, un fluoro-aminoalkyl-propyl-trialcoxy-silane, un fluorométhanesulfonate, un fluoropropyl-alkyl-dialcoxy-silane, un triphényl-fluoro-silane, un trialcoxy-fluoro-silane, un trialkyl-fluoro-silane, et/ou un (tridécafluoro-octyl)-trialcoxy-silane.

6. Procédé conforme à l'une des revendications 1, 4 et 5, **caractérisé en ce que** le silane comporte au moins deux groupes amino, ainsi qu'au moins un groupe éthyle et/ou au moins un groupe méthyle.

7. Procédé conforme à l'une des revendications précédentes, **caractérisé en ce que** la composition aqueuse contient aussi au moins un chélate de métal et/ou au moins un oligomère, polymère ou copolymère (composants (c) et (d), respectivement).

8. Procédé conforme à l'une des revendications précédentes, **caractérisé en ce qu'**il y a, contenu également dans la composition aqueuse, au moins un composant (e) choisi dans l'ensemble formé par les suivants :
e₁) au moins un composé inorganique, sous forme de particules dont le diamètre moyen, mesuré à l'aide d'un microscope électronique à balayage, vaut de 0,005 à 0,3 µm ;
e₂) au moins un lubrifiant ;
e₃) au moins un inhibiteur de corrosion organique ;
e₄) au moins un pigment protecteur anti-corrosion ;
e₅) au moins un agent de neutralisation et/ou de stabilisation stérique pour résines artificielles ;
e₆) au moins un solvant organique ;
e₇) au moins un siloxane ;
e₈) au moins un alcool à longue chaîne ;
e₉) au moins un tensioactif.

9. Procédé conforme à l'une des revendications précédentes, **caractérisé en ce que** l'agent filmogène organique est un mélange de résines artificielles constitué d'au moins un polymère et/ou d'au moins un copolymère, qui contient une certaine quantité de résine artificielle à base d'acrylate, d'époxyde, d'éthylène, d'urée-formaldéhyde, de phénol, de polyester, de polyuréthane, de styrène, de styrène-butadiène et/ou de composé vinylique.

10. Procédé conforme à l'une des revendications précédentes, **caractérisé en ce que** l'agent filmogène organique contient également, en tant que résine artificielle, une certaine quantité d'un polymère ou copolymère organique et/ou d'un mélange de tels polymères, à base de poly(éthylène-imine), poly(alcool vinylique), poly(vinyl-phénol), poly(vinyl-pyrrolidone) et/ou poly(acide aspartique), en particulier des copolymères préparés avec un composé vinylique phosphoré.

11. Procédé conforme à l'une des revendications précédentes, **caractérisé en ce que** les groupes acides des résines artificielles sont stabilisés avec de l'ammoniac, avec des amines, comme par exemple la morpholine, la diméthyl-éthanolamine, la diéthyl-éthanolamine ou la triéthanolamine, et/ou avec des composés de métal alcalin, comme par exemple de l'hydroxyde de sodium.

12. Procédé conforme à l'une des revendications précédentes, **caractérisé en ce que** la composition aqueuse contient de 0,1 à 980 g/L et de préférence de 2 à 600 g/L de l'agent filmogène organique.

13. Procédé conforme à l'une des revendications précédentes, **caractérisé en ce que** la teneur de la composition aqueuse en silane non-fluoré au nombre d'au moins un, y compris les produits de réaction formés à partir de celui-ci, vaut de préférence de 0,05 à 300 g/L.

14. Procédé conforme à l'une des revendications précédentes, **caractérisé en ce que** la teneur de la composition aqueuse en silane fluoré au nombre d'au moins un, y compris les produits de réaction formés à partir de celui-ci, vaut de préférence de 0,01 à 150 g/L.

15. Procédé conforme à l'une des revendications précédentes, **caractérisé en ce que** le chélate de métal au nombre d'au moins un est choisi parmi les complexes chélates à base d'acétyl-acétonates, d'acéto-acétates, d'acétonates, d'alkylène-diamines, d'amines, de lactates, d'acides carboxyliques, de citrates et/ou de glycols, et la teneur de la composition aqueuse en chélate au nombre d'au moins un, y compris les produits de réaction éventuellement formés à partir de celui-ci, vaut de préférence de 0,1 à 80 g/L.

16. Procédé conforme à l'une des revendications précédentes, **caractérisé en ce que** l'on ajoute, en tant que composé inorganique en particules, par exemple un carbonate, un oxyde, un silicate ou un sulfate, à l'état de poudre fine, de dispersion ou de suspension, et en particulier de particules colloïdales et/ou amorphes.

17. Procédé conforme à l'une des revendications précédentes, **caractérisé en ce que** l'on ajoute, en tant que composé inorganique en particules, des particules à base d'au moins un composé de l'aluminium, du baryum, du cérium, du calcium, du lanthane, du silicium, du titane, de l'yttrium, du zinc et/ou du zirconium.

18. Procédé conforme à l'une des revendications précédentes, **caractérisé en ce que** l'on utilise, en tant que lubrifiant, au moins une cire choisie dans l'ensemble formé par les paraffines, polyéthylènes et polypropylènes, en particulier une cire oxydée, la teneur de la composition aqueuse en cire valant alors de préférence de 0,01 à 5 % en poids.

19. Procédé conforme à l'une des revendications précédentes, **caractérisé en ce que** le revêtement est en partie préparé par séchage et étalement du film et/ou amené à durcir par irradiation avec des rayons actiniques, polymérisation cationique et/ou réticulation thermique.

20. Procédé conforme à l'une des revendications précédentes, **caractérisé en ce que** la composition aqueuse contient au moins un adjuvant, et en particulier, au moins un adjuvant choisi dans l'ensemble formé par au moins un biocide, au moins un agent anti-mousse et/ou au moins un agent gélifiant.

21. Procédé conforme à l'une des revendications précédentes, **caractérisé en ce que** la surface métallique revêtue est séchée à une température située dans l'intervalle allant de 20 à 400 °C (température de l'air ambiant).

22. Procédé conforme à l'une des revendications précédentes, **caractérisé en ce que** la composition aqueuse est déposée par enduction au rouleau, submersion, enduction à la racle, projection, pulvérisation, enduction à la brosse ou immersion, avec, le cas échéant, exprimage ultérieur au rouleau.

23. Procédé conforme à l'une des revendications précédentes, **caractérisé en ce que**, sur le film séché et le cas échéant durci, on dépose au moins une couche de revêtement faite d'une encre d'imprimerie, d'une feuille, d'une laque, d'un matériau de type laque, d'une laque en poudre, d'un adhésif et/ou d'un support d'adhésif.

24. Procédé conforme à l'une des revendications précédentes, **caractérisé en ce que** les pièces métalliques, rubans ou découpes de ruban revêtus sont façonnés, laqués, revêtus de polymère, par exemple de PVC, pressés, collés, soudés à chaud, brasés et/ou assemblés par agrafage ou une autre technique d'assemblage, les uns aux autres ou avec d'autres éléments.

25. Composition aqueuse, conçue pour le traitement préalable d'une surface métallique avant une autre opération de revêtement ou pour le traitement d'une telle suface, **caractérisée en ce que** cette composition comprend, outre de l'eau :
a) une combinaison comportant au moins un trialcoxy-silane fonctionnalisé, au moins un amino-silane, au moins un uréido-silane ou au moins un vinyl-silane, avec dans chaque cas au moins un bis(trialcoxy-silane), lesquels sont chacun non-fluorés et hydrolysables et/ou au moins partiellement hydrolysés,
b) et au moins un silane fluoré et hydrolysable et/ou au moins partiellement hydrolysé,
le rapport quantitatif du composant (a) au composant (b), y compris les produits de réaction respectifs formés à partir de ceux-ci, vaut de 1/0, 01 à 1/4,
et les silanes présents dans la composition sont solubles dans l'eau, ou deviennent solubles dans l'eau, notamment en raison de réactions chimiques et/ou de leur hydrolyse, le cas échéant supplémentaire.

26. Utilisation d'un substrat revêtu selon un procédé conforme à l'une au moins des revendications 1 à 24 précédentes, sous forme de fil métallique, de ruban, de tôle ou de pièce, pour un bobinage de fil métallique, un treillis métallique, un ruban d'acier, une tôle, un revêtement, un blindage, une carrosserie ou une pièce de carrosserie, une pièce de véhicule, de remorque, de caravane ou d'engin volant, un couvercle, un boîtier, une lampe, un appareil d'éclairage, un élément de lampe suspendue, un meuble ou un élément de meuble, un élément d'appareil ménager, un bâti, un profilé, une pièce moulée de forme géométrique compliquée, un élément de plaque de guidage, d'appareil de chauffage ou de palissade, un pare-chocs, une pièce constituée d'un tube et/ou d'un profilé ou comportant au moins un tube et/ou un profilé, un châssis de fenêtre ou de porte, un cadre de bicyclette, ou une petite pièce comme une vis, un écrou, une bride, un ressort ou une monture de lunettes.

27. Utilisation d'une composition définie dans l'une au moins des revendications 1 à 25 en tant que solution de rinçage qui est appliquée sur un revêtement déposé préalablement, comme par exemple un enduit de conversion, et/ou en tant que composition de protection anti-corrosion.
